# EUROPEAN PATENT SPECIFICATION

(11) **EP 0 747 210 B1**
(45) Date of publication and mention of the grant of the patent: **05.03.2003**
(21) Application number: 96107691.6
(22) Date of filing: 14.05.1996
(51) Int. Cl.: B32B 17/10, C03C 27/12

(54) **Interlayer film and laminated glass comprising the same**
Zwischenschichtfilm und diesen enthaltendes Verbundglas
Film intercalaire et verre feuilleté le comprenant

(30) Priority: 08.06.1995 JP 14184195; 09.08.1995 JP 20313595; 06.11.1995 JP 28732295
(43) Date of publication of application: 11.12.1996
(73) Proprietor: SEKISUI CHEMICAL CO., LTD., Osaka-shi, Osaka 530 (JP)
(72) Inventor: Shohi, Hajime, c/o Sekisui Chemical Co., Ltd., Mishima-gun, Osaka (JP); Bando, Akihiko, c/o Sekisui Chemical Co., Ltd., Mishima-gun, Osaka (JP); Ueda, Naoki, c/o Sekisui Chemical Co., Ltd., Mishima-gun, Osaka (JP); Hayashi, Satoshi, c/o Sekisui Chemical Co., Ltd., Koka-gun, Shiga (JP)
(74) Representative: Barske, Heiko, Dr. rer. nat.

(56) References cited:
- EP-A- 0 145 928
- EP-A- 0 517 114
- EP-A- 0 602 644
- WO-A-95/26377
- DE-A- 4 308 885

## Description

### FIELD OF THE INVENTION

This invention relates to an interlayer film basically made of ethylene-vinyl acetate copolymer or ethylene-(meth)acrylate copolymer, for a laminated glass, and a laminated glass comprising the same.

### BACKGROUND OF THE INVENTION

Laminated glass is used for automobile safety glass plates, glazing materials for public facilities and sports/excercise facilities, partitions and security doors. In general, laminated glass is prepared by laminating a plurality of inorganic glass plates via interlayer films, and some of inorganic glass plates may be replaced with organic glass plates, i.e. synthetic resin plates.

As an interlayer film for laminated glass, a film made of polyvinylbutyral resin plasticized by the addition of a plasticizer, which has a combination of excellent adherability to glass, tough tensile strength and a high degree of transparency, has been used as the most common material.

However, when laminated glass is produced by using an interlayer film of this resin, the interlayer film needs to be adjusted for humidity before the lamination process with glass, and furthermore, the lamination process has to be carried out at high temperatures and high pressures using an autoclave. These complicate the lamination process.

In addition, when this interlayer film is used to laminate synthetic resin transparent plates, the plasticizer in the interlayer film bleeds into the interface with the synthetic resin plate, thus making the adherability insufficient and at the same time turning the synthetic resin plate white by erosion.

In order to overcome these shortcomings, the following three methods have been proposed;
(1) An interlayer film is made of thermoplastic resins obtained by partial esterification of ethylene-vinyl acetate copolymer partial saponification products. ( Japanese Patent Publication No. 72-2103)
(2) A crosslinkable interlayer film is made of a thermosetting resin composition comprising ethylene-vinyl acetate copolymer, organic peroxide and silane coupling agents. A laminated glass is produced by heating (hardening) the crosslinkable interlayer film during the lamination process. (Japanese Patent Publication No. 90-53381.)
(3) An interlayer film is made of a resin composition comprising ethylene-vinyl acetate copolymer or ethylene-alkyl (meth) acrylate copolymer and transparency improvement agent such as condensation products. (Japanese Laid-open Patent Publication No. 7-2551.)

However, the above-mentioned interlayer film (1) made of the partial esterification product of ethylene-vinyl acetate has shortcomings in that the adherability to glass, transparency, weatherability and humidity resistance are poor.

The interlayer film (2) made of a thermosetting resin composition comprising ethylene-vinyl acetate copolymer, organic peroxide etc. has advantages in that: the transparency improves because the crystallinity decreases during the thermal modification; room temperature storage is possible; humidity control is not necessary; and lamination can be done without using an autoclave. However, since it utilizes radicals generated from the decomposition of organic peroxides, it requires a high process temperature, 140 to 150 °C, so that it requires heat resistant dyes when used for ornamental laminated glass, leading to poor workability and higher costs. It also has the shortcoming of thermal deformation when used for synthetic resin plates.

The interlayer film (3) made of a resin composition comprising ethylene-vinyl acetate copolymer or ethylene-alkyl (meth) acrylate copolymer and transparency improvement agent etc. has advantages in that it allows the lamination process with no autohesion of film, no humidity control and no autoclave at lower temperatures and pressures, without sacrificing the basic characteristics required for laminated glass, such as transparency, humidity resistance, impact resistance and adherability to synthetic resin plates. However, it has the following shortcomings in storability.

Fitting glass plates in window sashs, cushioning materials such as flexible plastic beads, called glazing channels, are utilized. Using laminated glass in such manner, the plasticizers in the beads transfer to the interlayer film from the edge portion of laminated glass, and diffuse into the interlayer film. This brings about peelings in the interface of interlayer film / glass plates.

Such storability as does not cause above-mensioned peelings, is called "plasticizer resistance" or "resistance to glazing channel".

Any of the above-mentioned three interlayer films have problems in the plasticizer resistance.

Accordingly, it is an object of the present invention to provide an interlayer film and laminated glass which uses it, wherein the interlayer film allows the lamination process at comparatively lower temperatures with no humidity control and no autoclave, without sacrificing the basic characteristics required for laminated glass, such as transparency, humidity resistance, weatherability, impact resistance and adherability.

It is a further object of the present invention to provide an interlayer film and laminated glass which is improved in the long-term plasticizer resistance.

As mentioned above, laminated glass is used for instance for a front window of vehicles such as automobile. As an interlayer film of this kind of the laminated glass, a plasticized polyvinyl butyral interlayer film is mainly used. On the other hand, the degree of safety requested to the side window glass of vehicles, such as automobile. is not so large in comparison with the front window glass. Therefore, a reinforced glass, which is cheaper than the laminated glass using the plasticized polyvinyl butyral interlayer film, is widely used. However, there has recently been requested a laminated glass, which is not easily broken and glass fragments are not scattered even if it is broken, as the side window glass of vehicles, such as automobile, in view of increase in safety sense and prevention of theft of articles in the vehicles.

It has been known that the laminated glass using the plasticized polyvinyl butyral interlayer film is used as the side window glass of the automobile ( Japanese Laid-Open Utility Model Publication No. 57- 116510).

A glass plate having no edge frame is normally mounted to the vehicle side window so that it can go up and down. When the laminated glass using the plasticized polyvinyl butyral interlayer film is used as the glass plate having no edge frame, the interlayer film is exposed at the edge of the laminated glass.

Therefore, there is a problem that the interlayer film whose edge is exposed absorbs moisture when using for a long period of time to cause whitening of the edge portion. In addition, the interface is peeled off to cause poor appearance, which results in inferior safety. Even if the edge has been treated, the treated portion sometimes becomes fatigued when using for a long period of time, and it is difficult to completely prevent moisture absorption.

A still further object of the present invention is to provide a laminated glass for vehicle side window having an excellent safety, which shows little moisture absorption from the edge of the laminated glass even if it is used for a long period of time and causes no poor appearance such as whitening of the edge portion of the interlayer film, interfacial peeling, etc.

The above objects are solved by the interlayer film according to claim 1 and the laminated glass according to claim 13 of the present invention. Further developments of the present invention are set out in the dependent claims.

### SUMMARY OF THE INVENTION

To achieve the above-mentioned third object, this invention provides a laminated glass for use as a vehicle side window to be mounted to a vehicle side window so that it can go up and down, comprising an interlayer film interposed between glass plates, the interlayer film being made of a resin film containing an ethylene-vinyl acetate copolymer or an ethylene-(meth)acrylate copolymer or a modified product thereof as a main component.

The invention concerning the above-mentioned laminated glass for vehicle side window to be mounted to a vehicle side window is hereinafter referred to as "the first aspect of the invention."

In the above-mentioned laminated glass, the peel strength between the interlayer film and an inorganic or organic glass plate or a plastic film or sheet, which is provided in contact with the interlayer film, is preferably 0.01 to 15 kg/cm.

In the above-mentioned laminated glass, the melt flow rate of the ethylene-(meth)acrylate copolymer is preferably 0.1 to 500 g/10 minutes.

In the above-mentioned laminated glass, the water absorption rate ( water absorption rate at 23 °C for 24 hours according to JIS K7209 ) of the interlayer film is preferably not more than 1.5 % by weight.

In the above-mentioned laminated glass, a silane coupling agent is contained in the resin in the amount of 0.01 to 4 parts by weight, based on 100 parts by weight of the ethylene-vinyl acetate copolymer or ethylene-(meth)acrylate copolymer or modified poroduct thereof.

In the above-mentioned laminated glass, a rosin resin or hydrocarbon resin is contained in the resin in the amount of 1 to 40 parts by weight, based on 100 parts by weight of the ethylene-vinyl acetate copolymer or ethylene-(meth)acrylate copolymer or modified poroduct thereof.

In the above-mentioned laminated glass, the rosin resin or hydrocarbon resin may be a hydrogenated product thereof having a hydrogenation rate of 88 % by weight or higher, preferably 95% by weight or higher.

In the above-mentioned laminated glass, the rosin resin may be selected from the group consisting of wood rosin, gum rosin, tall oil rosin, polymerized rosin, hydrogenated rosin, rosin ester, hydrogenated rosin ester and mixtures thereof, and said hydrocarbon resin is selected from the group consisting of aliphatic petroleum resin, aromatic petroleum resin, alicyclic petroleum resin, copolymer petroleum resin, hydrogenated petroleum resin, pure monomer petroleum resin and mixtures thereof.

As described above, the inventive laminated glass for a vehicle side window is a laminated glass of which the interlayer film contains an ethylene-vinyl acetate copolymer or an ethylene-(meth)acrylate copolymer or a modified product of these copolymers as a main component. Such a laminated glass using the interlayer film shows moisture absorption properties which are drastically smaller than those of a conventional laminated glass using a plasticized polyvinyl butyral interlayer film, and causes no poor appearance such as whitening of the edge portion of the interlayer film, interfacial peeling even if it is used in the state where the edge portion of the laminated glass is exposed for a long period of time.

Regarding those containing a specified amount of silane coupling agent in the above resin film, or having a specified peel strength between the interlayer film and inorganic or organic glass plate, the above-mentioned effect is further improved.

Furthermore, the laminated glass for vehicle side window of the present invention is cheap in comparison with a conventional laminated glass using a plasticized polyvinyl butyral interlayer film, and is less easily broken than a conventional reinforced glass. Even if it is broken, glass fragments are not easily scattered. Therefore, it is superior in action of safely protecting the human body at the time of collision between vehicles, thereby obtaining prevention of theft of articles in the automobile and high safety, similar to the laminated glass to be used for the vehicle front window.

To achieve the above-mentioned first object, this invention provides an interlayer film made of a composition comprising 100 weight parts of ethylene-vinyl acetate copolymer or ethylene-alkyl (meth) acrylate copolymer, 0.01 to 4 weight parts of a transparency improvement agent, 0.01 to 4 weight parts of a silane coupling agent and 1 to 40 weight parts of a rosin resin or hydrocarbon resin, and laminated glass which uses the interlayer film.

The invention concerning the above-mentioned interlayer film is hereinafter referred to as "the second aspect of the invention."

In the above-mentioned interlayer film, the melt index of the ethylene-vinyl acetate copolymer or ethylene-alkyl (meth)acrylate copolymer may be 0.1 to 500 g/10-minutes, according to ASTM 1238-65T.

In the above-mentioned interlayer film the transparency improvement agent may be a condensation product of polyhydric alcohol having 5 or more hydroxyl groups or its derivative and benzaldehyde or its derivative, or a calixarene represented by the following general formula (I).

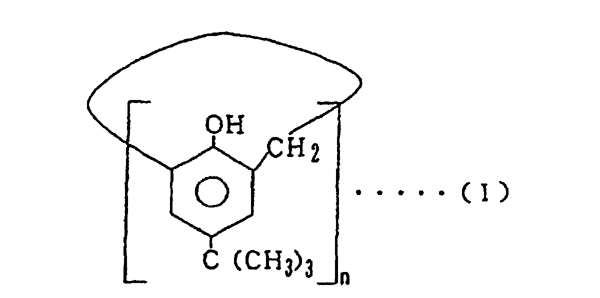

Wherein, n is an integer of 4 to 16.

In the above-mentioned interlayer film, the condensation product or compound (I) may be selected from the group consisting of a dibenzylidenesorbitol compound, a dibenzylidenexylitol compound, a dibenzylidenedulcitol compound, a dibenzylidenemannitol compound and a calixarene compound.

The amount of the transparency improvement agent is preferably 0.02 to 1 parts by weight, based on 100 parts by weight of ethylene-vinyl acetate copolymer or ethylene-(meth) acrylate copolymer.

In the above-mentioned interlayer film the silane coupling agent may be a silane compound which has a organic functional group selected from amino, glycidyl, mercapto, vinyl and methacryl, and a hydrolyzable group.

The amount of the silane coupling agent is preferably 0.02 to 2 parts by weight, based on 100 parts by weight of ethylene-vinyl acetate copolymer or ethylene-(meth) acrylate copolymer.

To achieve the above-mentioned second object, a hydrocarbon resin may be favorably used in the above-mentioned interlayer film. In particular, a hydrogenated hydrocarbon resin having a hydrogenation rate of 88 % by weight or higher is preferable. A hydrogenated hydrocarbon resin having a hydrogenation rate of 95 % by weight or higher is more preferable.

The rosin resin or hydrocarbon resin may be selected from the group consisting of wood rosin, gum rosin, tall oil rosin, polymerized rosin, hydrogenated rosin, rosin ester, hydrogenated rosin ester and mixtures thereof, and the hydrocarbon resin may be selected from the group consinting of aliphatic petroleum resin, aromatic petroleum resin, alicyclic petroleum resin, copolymer petroleum resin, hydrogenated petroleum resin, pure monomer petroleum resin and mixtures thereof.

The amount of the rosin resin or hydrocarbon resin is preferably 2 to 30 parts by weight, based on 100 parts by weight of ethylene-vinyl acetate copolymer or ethylene-(meth) acrylate copolymer.

A laminated glass may be prepared by laminating an interlayer film according to the present invention between a plurality of glass plates.

The interlayer film according to the second aspect of the invention allows the lamination process at comparatively lower temperatures with no humidity control and no autoclave, without sacrificing the basic characteristics required for laminated glass, such as transparency, heat resistance, humidity resistance, weatherability, impact resistance, adherability and non-autohesion property, and thereby it has significant advantages in terms of performance and processability.

Further, the interlayer film according to the invention improves in long-term plasticizer resistance, and thereby this prevents the adhesion between glass plates and interlayer film at the edge of beads from lowering caused by the plasticizer in the beads during long-term use.

### DETAILED DESCRIPTION OF THE INVENTION

A more detailed description of the inventive interlayer film is given below.

The ethylene-vinyl acetate copolymer used in this invention is known to differ in transparency and mechanical properties depending on vinyl acetate content thereof.

The vinyl acetate content of the copolymer is preferably 5 to 50 % by weight, more preferably 10 to 40 wt %, and most preferably 18 to 35 % by weight. The ethylene-(meth) acrylate copolymer used in this invention is also known to differ in transparency and mechanical properties depending on (meth) acrylate the content thereof.

The (meth) acrylate content of the copolymer is preferably 5 to 50 % by weight, more preferably 10 to 40 % by weight, and most preferably 18 to 35 % by weight.

The (meth) acrylate composing the ethylene-(meth) acrylate copolymer may be methyl (meth) acrylate, butyl (meth) acrylate and 2-ethylhexyl (meth) acrylate.

If the content of vinyl acetate or (meth) acrylate in each copolymer is too high, then the transparency of the interlayer film obtained is good, but the mechanical properties such as tensile strength are poor, i.e. the breaking-point strength is low. If the content of vinyl acetate or (meth) acrylate is too low, then the tensile strength is expected to be good, but the incipient fluidization temperature increases to deteriorate the lamination processability, and the transparency may decrease significantly.

The melt index (MI) of the ethylene-vinyl acetate copolymer or ethylene-(meth)acrylate copolymer may be 0.1 to 500 g/10-minutes. More preferred range is 1 to 200 g/10-minutes.

If MI of the ethylene-vinyl acetate copolymer or ethylene-(meth)acrylate copolymer is too low, then the fluidity of the resin composition decreases and the processability (deaeration, process time) becomes significantly poor. If it is too high, then the viscosity of the resin composition decreases and the impact resistance of the laminated glass obtained will decrease, and the interlayer film may bulge out from the edges or may become thinner.

The ethylene-vinyl acetate copolymer or ethylene(meth)acrylate copolymer can be manufactured by a known method such as high pressure method and emulsion method.

The range of the weight average molecular weight of the ethylene-vinyl acetate copolymer or ethylene(meth)acrylate copolymer is preferably 3,000 to 500,000, more preferably 5,000 to 300,000, most preferably 10,000 to 250,000.

The ethylene-vinyl acetate copolymer or ethylene(meth)acrylate copolymer may be optionally modified (e.g. by plasticization, partial saponification, acid modification or crossinking) to form a modified product. In addition, formulation components such as adhesion adjustors, ultraviolet absorbers, heat stabilizers, and antioxidants may be optionally added thereto.

For example, these copolymers and their modified products are described in Japanese Patent Publication Nos.72-2103 and 90-53381 and Japanese Laid-Open Patent Publication No.7-2551 and already known. In the present invention, it is possible to select a suitable one from these known copolymers and their modified products and various formulation components.

For the transparency improvement agent in this invention, a condensation product of polyhydric alcohol having 5- or more hydroxyl groups and its derivative and preferably 1.8 to 2.8 equivalents of benzaldehyde and its derivative, or a compound represented by the above-mentioned general formula (I) may be used.

Typical examples of the polyhydric alcohol and its derivatives used in this invention may be sorbitol (glucitol), xylitol, mannitol, dulcitol, sorbose, arabinitol, ribitol and fructose. In particular, a condensation product obtained from sorbitol, xylitol, mannitol or dulcitol improves the transparency significantly. These can be used individually or in combination.

Examples of benzaldehyde and its derivatives used in this invention may be substitution products of benzaldehyde with at least one of chlorine atom, alkyl group ,aryl group and alkoxy group.

This condensation product is synthesized in the following manner. Under the presence of inert gas, polyhydric alcohol or its derivatives is put into a reactor equipped with cooling pipes and an agitator, then benzaldehyde or its derivative is put into the reactor, and a condensation acid catalyst is added, followed by a heated reaction for synthesis.

Examples of the condensation acid catalyst used in the synthesis may be sulfuric acid, p-toluenesulfonic acid, phosphoric acid, hydrochloric acid and zinc chloride.

The compound represented by the above-mentioned general formula (I) may be prepared by a known method (Accounts of Chemical Research, 16, 161 (1983)).

Examples of the condensation product or the compound represented by the formula (I) may be dibenzylidenesorbitol, dibenzylidenexylitol, dibenzylidenedulcitol, dibenzylidenemannitol, and calixarene which are described in Japanese Laid-open Patent Publication No. 95-2551.) These can be used individually or in combination. In particular, dibenzylidenesorbitol and calixarene are preferable.

Examples of the dibenzylidenesorbitol compound described above may be dibenzylidenesorbitol, bis (methylbenzylidene) sorbitol, bis (ethylbenzylidene) sorbitol, bis (propylbenzylidene) sorbitol, bis (butylbenzylidene) sorbitol, bis (pentylbenzylidene) sorbitol, bis (hexylbenzylidene) sorbitol, bis (chlorobenzylidene) sorbitol.

Examples of the calixarene are 4-t-butylcalix[4]arene, 4-t- butylcalix[5]arene, 4-t-4-t-butylcalix[6]arene, 4-t-butylcalix[7]arene, 4-t-4-t-butylcalix[8]arene, 4-t-butylcalix[9]arene, 4-t-4-t-butylcalix[10]arene, 4-t-butylcalix[11]arene, 4-t-4-t-butylcalix[12]arene, 4-t-butylcalix[13]arene, 4-t-4-t-butylcalix[14]arene 4-t-butylcallx[15]arene and 4-t-butylcalix[16]arene. In particular, the calixarenes with n of 4 to 8 in the formula (I) are preferable because they diffuse well into the resin.

Each number in the bracket is a value of n in the above-mentioned formula (I).

Other examples of the transparency improvement agent used in this invention are tribenzylidenesorbitol, sodium bis(4-t-butylphenyl) phosphate, sodium -2,2'-methylene bis(4,6-di-t-butylphenyl) phosphate, and hydroxy-di (t-butylbenzoic acid) aluminum. In particular, when these are used in combination with at least one transparency improvement agent selected from the group consisting of dibenzylidenesorbitol compound, dibenzylidenexylitol compound, dibenzylidenedulcitol compound, dibenzylidenemannitol compound, and calixarene compound, the obtained interlayer film and the laminated glass are further improved in transparency.

The amount of the transparency improvement agent to be added should be 0.01 to 4 parts by weight, based on 100 parts by weight of ethylene-vinyl acetate copolymer or ethylene-(meth)acrylate copolymer. The more preferable range is 0.02 to 1 parts by weight.

When the amount of the transparency improvement agent is too small, then improvement of the transparency is not sufficient. On the contrary, when the amount of the transparency improvement agent is too large, it brings about decrease of its solubility in ethylene-vinyl acetate copolymer or ethylene-(meth)acrylate copolymer, and reduce the transparency.

The silane coupling agent used in the present invention improves adherability of the obtained interlayer film, and has at least one organic functional group and hydrolyzable group.

Example of the organic functional group is amino group, glycidyl group, mercapto group, vinyl group and methacryl group. Preferred silane coupling agent is that described in Japanese Laid-open Patent Publication No.7-2551.

Examples of the silane coupling agents containing amino group(s) are 3-aminopropyldimethylethoxysilane, 3-aminopropylmethyldiethoxysilane, 3-aminopropyltrimethoxysilane, 3-aminopropyltriethoxysilane, N-(2-aminoethyl)-3-aminopropylmethyldimethoxysilane and N-(2-aminoethyl)-3-aminopropyl trimethoxysilane.

Examples of the silane coupling agents containing glycidyl group(s) are 3-glycidoxypropyldimethylethoxysilane, (3-glycidoxypropyl) methyldiethoxysilane, 3-glycidoxypropyltrimethoxysilane and 2-(3,4-epoxycyclohexyl)ethyltrimethoxysilane.

Examples of the silane coupling agents containing mercapto group(s) are mercaptomethyldimethyl ethoxysilane, (mercaptomethyl) methyldiethoxysilane, 3-mercaptopropylmethyldimethoxysilane, 3-mercaptopropyltrimethoxysilane, 3-mercaptopropyltriethoxysilane, 3-mercaptopropyldimethylethoxysilane and 3-mercaptopropylmethyldiethoxysilane. An example of the silane coupling agent containing vinyl group(s) is vinyltriethoxysilane.

Example of the silane coupling agent containing methacryl group(s) is gamma-methacryloxypropyltrimethoxysilane.

These can be used individually or in combination.

The amount of these silane coupling agents to be added should be 0.01 to 4 parts by weight, based on 100 parts by weight of ethylene-vinyl acetate copolymer or ethylene-(meth)acrylate copolymer. More preferred range is 0.02 to 2 parts by weight.

When the amount of the silane coupling agent is too small, then improvement of the adherability cannot be achieved. On the contrary, when the amount of the silane coupling agent is too large, it brings about yellowing of the obtained interlayer film and a reduction of transparency of the obtained interlayer film and the resulting laminated glass.

In the invention, a rosin resin or hydrocarbon resin is added to the ethylene-vinyl acetate copolymer or ethylene-(meth) acrylate copolymer. The rosin resin or hydrocarbon resin is used to prevent the adherability between glass plates and interlayer film of the obtained laminated glass from decreasing during long-term storage and to ensure long-term performance. In particular, hydrocarbon resin such as petroleum resin improves long-term storability as well as long-term plasticizer resistance ,and thereby this prevents the adhesion between glass plates and interlayer film at the edge of beads from lowering caused by the plasticizer in the beads during long-term use. These aspects are totally different from those of the interlayer film and laminated glass thereof proposed by Japanese Laid-open Patent Publication No. 7-2551.

Considering the improvement of long-term plasticizer resistance, the preferred hydrocarbon resin is petroleum resin.

To improve weatherability, preferred hydrocarbon resin is hydrogenated petroleum resin having a hydrogenation rate of 88 % by weight or higher. More preferred hydrocarbon resin is hydrogenated petroleum resin having a hydrogenation rate of 95 % by weight or higher.

As the rosin resin there may be used rosin (e.g. wood rosin, gum rosin, tall oil rosin or polymerized rosin), hydrogenated rosin, rosin ester or hydrogenated rosin ester.

As the petroleum resin, there may be used aliphatic petroleum resin, aromatic petroleum resin, alicyclic petroleum resin, copolymer petroleum resin, hydrogenated petroleum resin or pure monomer petroleum resin. In particular, there may be used aliphatic (C₅ ) petroleum resin, aromatic (C₉ ) petroleum resin, alicyclic (C₉ ) petroleum resin, C₅ -C₉ copolymer petroleum resin, and pure monomer petroleum resin such as styrene oligomer.

There also may be used coumarone-indene resin, coumarone resin, terpene resin, alpha-methylstyrene polymer, vinyltoluene polymer and alpha-methylstyrene-vinyltoluene copolymer.

These can be used individually or in combination.

The amount of rosin resin is 1 to 40 parts by weight, preferably 2 to 30 parts by weight, based on 100 parts by weight of ethylene-vinyl acetate copolymer or ethylene-(meth) acrylate copolymer. When this amount is too small, the effect of improving long-term storability and long-term plasticizer resistance of obtained laminated glass is small. To the contrary, when this amount is too large, the mechanical strength such as tencile strength is low.

The amount of hydrocarbon resin is 1 to 40 parts by weight, preferably 2 to 30 parts by weight, based on 100 parts by weight of ethylene-vinyl acetate copolymer or ethylene-(meth) acrylate copolymer. When this amount is too small, the effect of improving long-term storability and long-term plasticizer resistance of laminated glass obtained is small. To the contrary, when this amount is too large, its dispersibility into the copolymer is poor, and the transparency of the interlayer film and the laminated glass is deteriorated.

In order to prevent deterioration of the interlayer film, a heat stabilizer, antioxidant and/or ultraviolet light absorbent, can be optionally added within the range which does not damage the physical properties of the interlayer film.

Examples of the heat stabilizer mentioned above are calcium stearate and dialkanol aliphatic tertiaryamine.

Examples of the antioxidant mentioned above are t-butylhydroxytoluene(BHT), tetrakis-[methylene-3-(3',5'-di-t-butyl-4'-hydroxyphenyl) propionate] methane, IRGANOX 1010, IRGANOX 1076 available from Ciba-Geigy Co., Ltd..

Examples of the ultraviolet light absorbent are benzotriazole types, hindered amino types and benzophenone types. Preferably used benzotriazole types are 2-(2'-hydroxy-5'-methylphenyl) benzotriazole, 2-(2'-hydroxy-3',5'-di-t-butylphenyl) benzotriazole, 2-(2'-hydroxy-3'-t-butyl-5'-methylphenyl )-5-chlorobenzotriazole, 2-(2'-hydroxy-3',5'-di-t-amylphenyl) benzotriazole, TINUViN P, TINUVIN 320, TINUVIN 326 and TINUVIN 328, respectively, available from Ciba-Geigy Co., Ltd.. Preferable hindered amine types are LA-57 available from Adecaagas Co., Ltd., LS-770 and LS-2626 available from Sankyo Co., Ltd.. Preferable benzophenone types are SEESORB 101, SEESORB 102, SEESORB 103, SEESORB 104 available from SHIPRO Chemical Co., Ltd..

In order to manufacture the interlayer film of this invention, it is necessary to uniformly mix the ethylene-vinyl acetate copolymer or ethylene-(meth)acrylate copolymer, the transparency improvement agent and the silane coupling agent. Examples of the mixing method follow: melt-kneading using a kneader such as a rollmill : the dry blend method which directly mixes the pellets of the ethylene-vinyl acetate copolymer or ethylene-(meth)acrylate copolymer with other ingredients; and extrusion molding using the high concentration master batch method, which dilutes the master batch pellets of the ethylene-vinyl acetate copolymer or ethylene-(meth)acrylate copolymer containing high concentrations of other ingredients with pellets of the ethylene-vinyl acetate copolymer or ethylene-(meth)acrylate copolymor to obtain molding with the prescribed concentrations. The resin composition obtained by such melt-kneading is then made into a interlayer film by the calender roll method, the extrusion sheet casting method or the inflation tube method.

If the interlayer film mentioned above is too thin, then the impact resistance of the laminated glass obtained will decrease, and if it is too thick, then the transparency of the laminated glass obtained will decrease. Therefore, 0.05 to 1 mm is a preferable range.

An example of the method of manufacturing laminated glass using this interlayer film is as follows. First, the interlayer film is placed between two transparent plates, already cleaned in advance, selected from glass plates and synthetic resin plates, and this sandwich construction is put into a rubber bag. After deaeration for a prescribed duration at a vacuum of 0 to 20 torr, it is transferred to an oven at 80 °C to 120 °C while in a deaerated state, and then kept heated at 80 °C to 120 °C in this oven to obtain the laminated glass. Alternatively, the above-mentioned sandwich construction is fed into pressurizing rubber rolls, which is heated to 100 °C or higher, for a prescribed period of time and press-bonded to obtain the laminated glass.

The laminated glass obtained by using the interlayer film of this invention basically has a layer structure of glass plate / interlayer film / glass plate. In addition, some multi-layered laminated glass also can be prepared.

Examples of such multi-layered laminated glass are:
(1) Glass plate/ interlayer film / polymer film / interlayer film / glass plate.
(2) Glass plate / interlayer film / metal plate / interlayer film / glass plate / interlayer film / polymer film.
(3) Glass plate / interlayer film / paper / interlayer film / glass plate.
(4) Synthetic resin plate / interlayer film / polymer film / interlayer film / synthetic resin plate
(5) Synthetic resin plate / interlayer film / metal plate / interlayer film / synthetic resin plate / polymer film
(6) Synthetic resin plate/ interlayer film / paper / interlayer film / synthetic resin plate.

Next, a more detailed description of the first aspect of the invention concerning the laminated glass for vehicle side window is given below.

This laminated glass for vehicle side window, which is mounted to a vehicle side window so that it can go up and down, comprises an interlayer film interposed between glass plates, and the interlayer film is made of a resin film containing an ethylene-vinyl acetate copolymer or an ethylene-(meth)acrylate copolymer or a modified product thereof as a main component.

Examples of the preferred interlayer film are those containing a silane coupling agent in the amount of 0.01 to 4 parts by weight, based on 100 parts by weight of the ethylene-vinyl acetate copolymer or ethylene-(meth)acrylate copolymer or modified product of these copolymers, and those wherein a peel strength between the interlayer film and inorganic glass plate or organic glass plate or plastic film or sheet, which is provided in contact with the interlayer film, is 0.01 to 15 kg/cm, preferably 0.1 to 5 kg/cm.

When the peel strength is too low, then the interlayer film and inorganic or organic glass plates or plastic films or sheets of the resulting laminated glass are easily peeled off each other. To the contrary, when it is too high, then the penetration resistance (impact absorption properties) of the laminated glass is lowered, which results in inferior safety.

The ethylene-vinyl acetate copolymer or an ethylene(meth)acrylate copolymer or a modified product thereof is the same as described above in the first invention.

A melt flow rate (MFR) of the ethylene-vinyl acetate copolymer or ethylene-(meth)acrylate copolymer is preferably 0.1 to 500 g/10 minutes, more preferably 1 to 200 g/10 minutes. MFR is measured according to JIS K7210 (temperature: 190 °C, load: 2.16 kg).

When MFR is too low, a fluidity of the interlayer film is lowered to deteriorate the processability (e.g. deaeration properties and processing time). To the contrary, when MFR is too high, a viscosity of the interlayer film is lowered and the interlayer film is pushed out from the edge portion after laminating. Therefore, the appearance becomes inferior, the thickness is decreased, and an impact resistance of the laminated glass is deteriorated.

The ethylene-vinyl acetate copolymer or ethylene(meth)acrylate copolymer may be optionally modified (e.g. by plasticization, partial saponification, acid modification or crosslinking) to form a modified product. In addition, formulation components such as adhesion adjustors, transparency modifiers, ultraviolet absorbers, heat stabilizers and antioxidants may be optionally added thereto. These agents are the same as those described in the first aspect of the invention.

A silane coupling agent is added as the adhesion adjustor to the ethylene-vinyl acetate copolymer or ethylene-(meth)acrylate copolymer or modified products of these copolymers. In addition, rosin resin or hydrocarbon resin is added to the ethylene-vinyl acetate copolymer or ethylene-(meth)acrylate copolymer or modified products of these copolymers to prevent the adherability between glass plates and interlayer film-of the obtained laminated glass from decreasing during long-term storage and to ensure long-term storability.

The silane coupling agent and the rosin resin or hydrocarbon resin are the same as those described in the first aspect of the invention.

In order to prepare the resin composition, the interlayer film from the composition, and the laminated glass from the interlayer film, there can be used methods which have hitherto been known. The details of the methods are described in the second aspect of the invention.

Furthermore, the vacuum bag may be optionally treated again in an elevated-temperature oven or autoclave so as to sufficiently adhere the glass plate to the interlayer film. The laminating is not limited to the above vacuum bag system, for example, a simple laminating device manufactured by Hightech Engineer Co., Ltd. can also be used.

In addition, it is possible to produce a laminated glass by using a film or sheet of plastic (e.g. polyethyleneterephthalate) in place of the transparent inorganic or organic glass plate which comes to internal side of the vehicle in the above-mentioned sandwich construction, or laminating the film or sheet of plastic (e.g. polyethyleneterephthalate, etc.) on the surface of the transparent inorganic or organic glass plate which comes to internal side of the vehicle, so as to surely prevent the glass fragments from scattering.

The laminated glass thus obtained can be used for mounting to the side window of vehicles such as automobile, in the state of no edge frame so that it can go up and down, similar to a conventional reinforced glass.

The interlayer film of the laminated glass is composed of the resin film containing the ethylene-vinyl acetate copolymer or ethylene-(meth)acrylate copolymer or modified product of these copolymers as the main component. Such a resin film has a water absorption rate (water absorption rate at 23 °C for 24 hours according to JIS K7209) of not more than 1.5% by weight. The water absorption rate is drastically lower than that (about 3.6% by weight) of the plasticized polyvinyl butyral interlayer film and, therefore, the laminate glass is less sensitive to water or moisture.

When a suitable amount of the silane coupling agent is contained in the resin film, the adherability between the interlayer film and glass plate is particularly improved. In addition, the laminated glass of the side window is not easily broken by the impact, and there can be improved properties of preventing the glass from scattering when the glass is broken.

### PREFERRED EMBODIMENTS

Examples of this invention and comparative examples are described below. The basic characteristics of the laminated glass obtained are also shown. Hereafter, " part(s)" means "part(s) by weight".

### Example 1

### (1) Preparation of the interlayer film

100 parts of a ethylene-vinyl acetate copolymer with a vinyl acetate content of 25 % by weight and a melt index (MI) of 2 g/10 minutes (EVA X505 available from Mitsubishi Chemical Co., Ltd.), 1.0 parts of dibenzylidenesorbitol(EC-1-55 available from EC Chemical Co., Ltd.), 0.1 part of 3-aminopropyltrimethoxysilane and 10 parts of rosin ester (KE-311 available from Arakawa Chemical Co., Ltd.) were fed into a roll mill, and melt-kneaded at 200 °C to obtain the resin composition.

The resin composition obtained was sandwiched between two 0.1-mm-thick polyethyleneterephthalate films, and the sandwich construction obtained was press-molded at a temperature of 150 °C and at a pressure of 120 kg/cm² for 30 minutes with a press-molding machine to obtain a resin sheet comprising a 0.4-mm-thick interlayer and the polyethyleneterephthalate films laminated on both sides. The resin sheet obtained was allowed to stand to cool until the temperature was down to 20 °C.

The polyethyleneterephthalate films on both sides of the resin sheet obtained were peeled off to give a 0.4-mm-thick interlayer film.

### (2) Preparation of the laminated glass

On both sides of the interlayer film, 30 cm long, 30 cm wide and 3 mm thick float glass plates were laminated to obtain a sandwich construction. The sandwich construction was then put into a vacuum bag and deaerated at a 10 torr vacuum for 20 minutes, and the vacuum bag with the sandwich construction in it, still in the deaerated state, was transferred into an oven, where it was kept for 10 minutes at 90 °C to obtain laminated glass having a layer structure of glass plate / interlayer film / glass plate.

### Examples 2 to 4, Comparative Examples 1 to 2

The interlayer films were obtained in the same way as in Example 1, except that prescribed amounts of ethylene-vinyl acetate copolymer or ethylene-(meth) acrylate copolymer, a transparency improvement agent, a silane coupling agent and a rosin resin or hydrocarbon resin as shown in Table 1, were used.

Laminated glass was then obtained by using the above-mentioned interlayer film in the same way as in Example 1.

### Examples 5 to 9, Comparative Examples 3 to 6

The interlayer films were obtained in the same way as in Example 1, except that prescribed amounts of ethylene-vinyl acetate copolymer or ethylene-(meth) acrylate copolymer, a transparency improvement agent, a silane coupling agent and a rosin resin or hydrocarbon resin as shown in Table 2, were used.

Laminated glass was then obtained by using the above-mentioned interlayer film in the same way as in Example 1, except that the sandwich construction was kept in the oven for 30 minutes at 100 °C.

### Examples 10 to 21, Comparative Examples 7 to 15

The interlayer films were obtained in the same way as in Example 1, except that prescribed amounts of ethylene-vinyl acetate copolymer or ethylene-(meth) acrylate copolymer, a transparency improvement agent, a silane coupling agent and a rosin resin or hydrocarbon resin as shown in Tables 3 and 4, were used.

Laminated glass was then obtained by using the above-mentioned interlayer film in the same way as in Example 1, except that the sandwich construction was kept in the oven for 10 minutes at 100 °C.

### Examples 22 to 26, Comparative Examples 18 to 21

The interlayer films were obtained in the same way as in Example 1, except that prescribed amounts of ethylene-vinyl acetate copolymer or ethylene-(meth) acrylate copolymer, a transparency improvement agent, a silane coupling agent and a rosin resin or hydrocarbon resin as shown in Table 5, were used.

Laminated glass was then obtained by using the above-mentioned interlayer film in the same way as in Example 1, except that the sandwich construction was kept in the oven for 30 minutes at 100 °C.

### Comparative Example 16

100 parts of a ethylene-vinyl acetate copolymer with a vinyl acetate content of 25 % by weight and a melt index (MI) of 2 g/10 minutes (EVAFLEX360 available from Mitsui-du-Pont Chemical Co., Ltd.), 3 parts of triallylisocyanurate (TAIKU available from Nippon Kasei Co., Ltd.), 1 part of 1,1-bis(t-butylperoxy)-3,3,5-trimethylcyclohexane (PERHEXA 3M available from Nippon Oils and Fats Co., Ltd.) and 0.3 part of gamma-methacryloxypropyltrimethoxy-silane, and melt-kneaded at 100 °C to obtain the resin composition.

Laminated glass was then obtained by using the above-mentioned resin composition in the same way as in Example 22, except that the sandwich construction was kept in the oven at 130 °C.

### Comparative Example 17

200 parts of ethylene-vinyl acetate copolymer (ULTRASEN 750 available from Tosoh co.) with a vinyl acetate content of 32 % by weight, MFR of 18g/10 minutes), 300 parts of a 10-wt% sodium hydroxide solution and 1500 parts of xylene were fed into a 3-necked flask equiped with an agitator and a reflux condenser. The hydrolysis reaction was then carried out during agitation and refluxing. The solid portion was collected by filtering to obtain a partially saponificated product with a degree of saponification of 90%.

180 parts of the partially saponificated product, 104 parts of phthalic anhydride, 40 parts of pyridine and 1500 parts of xylene are fed into a 3-necked flask equiped with an agitator and a reflux condenser. The reaction was carried out during agitation and refluxing at 110 °C for 4 hours. The solid portion was collected by filtering to obtain a modified product( the partially saponificated product, product which was partially esterified with phthalic anhydride).

The partially esterified product obtained was assayed by the element analysis and the infrared absorption spectral analysis to confirm that it had a vinyl acetate content of 3.2 % by weight, vinyl alcohol content of 16.1 % by weight, vinyl phthalate content of 12.7 % by weight and ethylene content of 68 % by weight.

Laminated glass was then obtained by using the above-mentioned partially esterified product in the same way as in Example 22.

**Table 1**

| (Composition of interlayer film) Parts by weight | | | | | | |
|---|---|---|---|---|---|---|
| | Examples | | | | Comparative examples | |
| | 1 | 2 | 3 | 4 | 1 | 2 |
| Copolymer | | | | | | |
| EVA (EVA X505) | 100 | - | - | - | - | - |
| EVA (ULTRASEN 751) | - | 100 | - | 100 | 100 | - |
| EA (ACRIFT WH202) | - | - | 100 | - | - | 100 |

| Transparency improvement agent | | | | | | |
|---|---|---|---|---|---|---|
| Dibenzylidenesorbitol | 1.0 | - | - | - | - | - |
| Bis(methylbenzylidene)sorbitol | - | 0.5 | - | - | 0.5 | - |
| Dibenzylidenesorbitol coated with higher fatty acid | - | - | 0.2 | - | - | 0.2 |
| 4-t-Butyl calix[4]arene | - | - | - | 0.3 | - | - |

| Silane coupling agent | | | | | | |
|---|---|---|---|---|---|---|
| 3-Aminopropyltrimethoxysilane | 0.1 | - | - | - | - | - |
| N-(2-Aminoethyl)-3-aminopropylmethyldimethoxysilane | - | 0.1 | - | 0.1 | - | - |
| 3-Mercaptopropyltriethoxysilane | - | - | 0.5 | - | - | - |
| N-(2-Aminoethyl)-3-aminopropyltrimethoxysilane | - | - | - | - | 0.1 | - |
| 3-Aminopropyltriethoxysilane | | | | | | |

| Rosin resin or hydrocarbon resin | - | - | - | - | - | 0.1 |
|---|---|---|---|---|---|---|
| Rosin KE-311 | 10 | - | - | - | - | - |
| Arkon P-90 | - | 5 | - | - | - | - |
| FTR-6100 | - | - | 20 | - | - | - |
| Arkon M-100 | - | - | - | 5 | - | - |

**Table 2**

| (Composition of interlayer film) Parts by weight | | | | | | | | | |
|---|---|---|---|---|---|---|---|---|---|
| | Examples | | | | | Comparative examples | | | |
| | 5 | 6 | 7 | 8 | 9 | 3 | 4 | 5 | 6 |
| Copolymer | | | | | | | | | |
| EVA (ULTRASEN 751) | 100 | - | - | - | - | 100 | 100 | 100 | 100 |
| EVA (EVAFLEX 170) | - | 100 | - | - | - | - | - | - | - |
| EVA (EVAFLEX 270) | - | - | 100 | - | - | - | - | - | - |
| EA (ACRIFT WH202) | - | - | - | 100 | - | - | - | - | - |
| EA (DPDJ-9169) | - | - | - | - | 100 | - | - | - | - |

| Transparency improvement agent | | | | | | | | | |
|---|---|---|---|---|---|---|---|---|---|
| Dibenzylidenesorbitol | 0.3 | - | - | - | - | 0.3 | 0.1 | 0.3 | 0.3 |
| Dibenzylidenexylitol | - | - | 1.0 | - | - | - | - | - | - |
| Dibenzylidenemannitol | - | - | - | 1.5 | - | - | - | - | - |
| 4-t-Butyl calix[4]arene | - | 0.3 | - | - | 0.1 | - | - | - | - |

| Silane coupling agent | | | | | | | | | |
|---|---|---|---|---|---|---|---|---|---|
| N-(2-Aminoethyl)-3-aminopropylmethyldimethoxysilane | 0.05 | 0.03 | - | - | - | 0.05 | 0.3 | - | 0.005 |
| N-(2-Aminoethyl)-3-aminopropyltrimethoxysilane | - | - | 0.3 | - | - | - | - | - | - |
| 3-Mercaptopropyltrimethoxysilane | - | - | - | 0.1 | - | - | - | - | - |
| 3-Glycidoxypropyltrimethoxysilane | - | - | - | - | 0.2 | - | - | - | - |
| 3-Aminopropyltrimethoxysilane | - | - | - | - | - | - | - | 0.5 | - |

| Rosin resin or hydrocarbon resin | | | | | | | | | |
|---|---|---|---|---|---|---|---|---|---|
| Arkon P115 | 7 | - | - | - | - | - | 50 | - | - |
| Arkon P90 | - | 20 | - | - | - | - | - | - | 10 |
| Arkon M90 | - | - | 15 | - | - | - | - | - | - |
| FTR-6100 | - | - | - | 5 | - | - | - | - | - |
| FTR-8100 | - | - | - | - | 20 | - | - | - | - |
| Rosin KE-311 | - | - | - | - | - | - | - | 10 | - |

**Table 3**

| (Cocposition of interlayer film) Parts by weight | | | | | | | | | | | | |
|---|---|---|---|---|---|---|---|---|---|---|---|---|
| | Examples | | | | | | | | | | | |
| | 10 | 11 | 12 | 13 | 14 | 15 | 16 | 17 | 18 | 19 | 20 | 21 |
| Copolymer | | | | | | | | | | | | |
| EVA (ULTRASEN 751) | 100 | - | - | 100 | 100 | 100 | 100 | 100 | 100 | 100 | 100 | 100 |
| EYA (EVA X505) | - | 100 | - | - | - | - | - | - | - | - | - | - |
| EA (ACRIFT WH202) | - | - | 100 | - | - | - | - | - | - | - | - | - |

| Transparency improvement agent | | | | | | | | | | | | |
|---|---|---|---|---|---|---|---|---|---|---|---|---|
| Dibenzylidenesorbitol | 0.3 | - | - | - | - | - | 0.3 | 0.3 | 0.3 | 0.3 | 0.3 | 0.3 |
| Bis(methylbenzylidene)sorbitol | - | 0.1 | - | - | - | - | - | - | - | - | - | - |
| Dibenzylidenesorbitol coated with higher fatty acid | - | - | 3.5 | - | - | - | - | - | - | - | - | - |
| 4-t-Butyl calix[4]arene | - | - | - | 0.05 | - | - | - | - | - | - | - | - |
| Dibenzylidenexylitol | - | - | - | - | 0.3 | - | - | - | - | - | - | - |
| Dibenzylidenemannitol | - | - | - | - | - | 0.3 | - | - | - | - | - | - |

| Silane coupling agent | | | | | | | | | | | | |
|---|---|---|---|---|---|---|---|---|---|---|---|---|
| N-(2-Aminoethyl)-3-aminopropylmethyldimethoxysilane | 0.05 | - | - | - | 0.05 | 0.05 | 0.05 | 0.05 | 0.05 | 0.05 | 0.05 | 0.05 |
| 3-Aminopropyltrimethoxysilane | - | 0.02 | - | - | - | - | - | - | - | - | - | - |
| 3-Mercaptopropyltrimethoxysilane | - | - | 3.5 | - | - | - | - | - | - | - | - | - |
| 3-Glycidoxypropyltrimethoxysilane | - | - | - | 1.0 | - | - | - | - | - | - | - | - |

| Hydrocarbon resin | | | | | | | | | | | | |
|---|---|---|---|---|---|---|---|---|---|---|---|---|
| [Petroleum resin] | | | | | | | | | | | | |
| Arkon P-115 (hydrogenated 95 wt%) | 7 | - | - | - | 7 | 7 | - | - | - | - | - | - |
| P-100 (hydrogenated 95wt%) | - | 3 | - | - | - | - | - | - | - | - | - | - |
| P-90 (hydrogenated 95 wt%) | - | - | 35 | - | - | - | - | - | - | - | - | - |
| P-70 (hydrogenated 95 wt%) | - | - | - | 7 | - | - | - | - | - | - | - | - |
| M-100 (hydrogenated 80 wt%) | - | - | - | - | - | - | 7 | - | - | - | - | - |
| FTR-6100 (non-hydrogenated) | - | - | - | - | - | - | - | 7 | - | - | - | - |
| FTR-8100 (non-hydrogenated) | - | - | - | - | - | - | - | - | 7 | - | - | - |

| Rosin resin | | | | | | | | | | | | |
|---|---|---|---|---|---|---|---|---|---|---|---|---|
| KE-311 | - | - | - | - | - | - | - | - | - | 10 | - | - |
| KR-611 | - | - | - | - | - | - | - | - | - | - | 10 | - |
| T-100X | - | - | - | - | - | - | - | - | - | - | - | 10 |

**Table 4**

| (Composition of interlayer film) Parts by weight | | | | | | | | | |
|---|---|---|---|---|---|---|---|---|---|
| | Cooperative examples | | | | | | | | |
| | 7 | 8 | 9 | 10 | 11 | 12 | 13 | 14 | 15 |
| Copolymer | | | | | | | | | |
| EVA (ULTRASEN 751) | 100 | - | - | 100 | - | - | 100 | - | - |
| EVA (EVA X505) | - | 100 | - | - | 100 | - | - | 100 | - |
| EA (ACRIFT WH202) | - | - | 100 | - | - | 100 | - | - | 100 |

| Transparency improvement agent | | | | | | | | | |
|---|---|---|---|---|---|---|---|---|---|
| Dibenzylidenesorbitol | - | - | - | 0.3 | - | - | 0.3 | - | - |
| Bis(methylbenzylidene)sorbitol | - | 0.005 | - | - | 0.3 | - | - | 0.3 | - |
| Dibenzylidenesorbitol coated with higher fatty acid | - | - | 6 | - | - | 0.3 | - | - | 0.3 |

| Silane coupling agent | | | | | | | | | |
|---|---|---|---|---|---|---|---|---|---|
| N-(2-Aminoethyl)-3-aminopropylmethyldimethoxysilane | 0.05 | - | 0.05 | - | 0.005 | - | 0.05 | - | 0.05 |
| 3-Aminopropyltrimethoxysilane | - | 0.05 | - | - | - | 6 | - | 0.05 | - |

| Hydrocarbon resin [Petroleum resin] | | | | | | | | | |
|---|---|---|---|---|---|---|---|---|---|
| Arkon P-115 (hydrogenated 95 wt.%) | 7 | - | - | 7 | - | - | - | - | - |
| P-100 (hydrogenated 95 wt. %) | - | 7 | - | - | 7 | - | - | 0.05 | - |
| P-90 (hydrogenated 95 wt.%) | - | - | 7 | - | - | 7 | - | - | 60 |

**Table 5**

| (Composition of interlayer film) Parts by weight | | | | | | | | | |
|---|---|---|---|---|---|---|---|---|---|
| | Examples | | | | | Comparative examples | | | |
| | 22 | 23 | 24 | 25 | 26 | 18 | 19 | 20 | 21 |
| Copolymer | | | | | | | | | |
| EVA (ULTRASEN 751) | 100 | - | - | - | - | 100 | 100 | 100 | 100 |
| EVA (EVAFLEX 170) | - | 100 | - | - | - | - | - | - | - |
| EVA (EVAFLEX 270) | - | - | 100 | - | - | - | - | - | - |
| EA (ACRIFT WH202) | - | - | - | 100 | - | - | - | - | - |
| EA (DPDJ-9169) | - | - | - | - | 100 | - | - | - | - |

| Transparency improvement agent | | | | | | | | | |
|---|---|---|---|---|---|---|---|---|---|
| Dibenzylidenesorbitol | 0.3 | - | - | - | - | 0.3 | 0.1 | 0.3 | 0.3 |
| Dibenzylidenexylitol | - | - | 1.0 | - | - | - | - | - | - |
| Dibenzylidenemannitol | - | - | - | 1.5 | - | - | - | - | - |
| 4-t-Butyl calix[4]arene | - | 0.3 | - | - | 0.1 | - | - | - | - |

| Silane coupling agent | | | | | | | | | |
|---|---|---|---|---|---|---|---|---|---|
| N-(2-Aminoethyl)-3-aminopropylmethyldimethoxysilane | 0.05 | 0.03 | - | - | - | 0.05 | 0.3 | - | 0.005 |
| N-(2-Aminoethyl)-3-aminopropyltrimethoxysilane | - | - | 0.3 | - | - | - | - | - | - |
| 3-Mercaptopropyltrimethoxysilane | - | - | - | 0.1 | - | - | - | - | - |
| 3-Glycidoxypropyltrimethoxysilane | - | - | - | - | 0.2 | - | - | - | - |
| 3-Aminopropyltrimethoxysilane | - | - | - | - | - | - | - | 0.5 | - |

| Rosin resin or hydrocarbon resin | | | | | | | | | |
|---|---|---|---|---|---|---|---|---|---|
| Arkon P-115 | 7 | - | - | - | - | - | - | - | - |
| Arkon P-90 | - | 20 | - | - | - | - | - | - | 10 |
| Arkon M-90 | - | - | 15 | - | - | - | - | - | - |
| FTR-6100 | - | - | - | 5 | - | - | - | - | - |
| FTR-8100 | - | - | - | - | 20 | - | - | - | - |
| Rosin KE-311 | - | - | - | - | - | - | - | - | - |
| T-100X | - | - | - | - | - | - | 20 | - - | - |
| KR-611 | - | - | - | - | - | - | - | 10 | - |

The details of the copolymers, the transparency improvement agent, the silane coupling agent and the rosin resin or hydrocarbon resin in Tables 1 to 5 are as follows.

**Table 6**

| Ethylene-vinyl acetate copolymer (EVA) | | | | | |
|---|---|---|---|---|---|
| | Vinyl acetate content (wt.%) | Weight average molecular weight (x10⁴) | MI (g/10 minutes) | Manufacturer | Product name |
| EVA X505 | 33 | 15 | 2 | Mitsubishi Chemical Co.,Ltd. | EVA X505 |
| ULTRASEN 751 | 28 | 12 | 6 | Tosoh Co.,Ltd. | ULTRASEN 751 |
| EVAFLEX 170 | 33 | 20 | 1 | Du Pont Mitsui Polychemicals Co.,Ltd. | EVAFLEX 170 |
| EVAFLEX 270 | 28 | 20 | 1 | Du Pont Mitsui Polychemicals Co.,Ltd. | EVAFLEX 270 |

**Table 7**

| Ethylene-(meth)acrylate copolymer (EA) | | | | | | |
|---|---|---|---|---|---|---|
| | MMA content (wt.%) | Weight average molecular weight (x10⁴) | MI (g/10 minutes) | Manufacturer | Product name | copolymer |
| ACRIFT WH202 | 20 | 18 | 4 | Sumitomo Chemicals Co., Ltd. | ACRIFT WH202 | Ethylene-methylmethacrylate copolymer |
| DPDJ -9169 | 20 | 12 | 20 | Nippon Unicar Co.,Ltd. | DPDJ -9169 | Ethylene-methylmethacrylate copolymer |

### Transparency Improvement Agent

Dibenzylidenesorbitol (EC-1-55, EC Chemical Co., Ltd.)

Bis(methylbenzylidene)sorbitol (GELOL MD, Shin Nippon Rika Co., Ltd.)

Dibenzylidenesorbitol coated with higher fatty acids (EC-1-70, EC Chemical Co., Ltd.)

4-t- Butylcalix[4]arene (Kanto Chemical Co., Ltd.)

dibenzylidenexylitol (Synthesized)

dibenzylidenemannitol (Synthesized)

### Silane Coupling Agent

3-aminopropyltrimethoxysilane (Chisso Co., Ltd.)

3-aminopropyltriethoxysilane (Chisso Co., Ltd.)

N-(2-aminoethyl)-3-aminopropylmethyldimethoxysilane (Chisso Co., Ltd.)

N-(2-aminoethyl)-3-aminopropyltrimethoxysilane (Chisso Co., Ltd.)

3-mercaptopropyltriethoxysilane (Chisso Co., Ltd.)

3-mercaptopropyltrimethoxysilane (Chisso Co., Ltd.)

3-glycidoxypropyltrimethoxysilane (Chisso Co., Ltd.)

### Rosin Resin

Rosin KE-311: rosin ester (KE-311, Arakawa Chemical Co., Ltd.)

Rosin KR-611: rosin ester (KR-611, Arakawa Chemical Co., Ltd.)

Rosin T-100X: rosin ester (T-100X, Mitsui Petrochemical Co., Ltd.)

### Petroleum resin

Arkon M-90: alicyclic petroleum resin having a hydrogenation rate of 80 % by weight ( Arkon M-90, Arakawa Chemical Co., Ltd.)

Arkon M-100: alicyclic petroleum resin having a hydrogenation rate of 80 % by weight ( Arkon M-100, Arakawa Chemical Co., Ltd.)

Arkon P-70: alicyclic petroleum resin having a hydrogenation rate of 95 % by weight ( Arkon MP70, Arakawa Chemical Co., Ltd.)

Arkon P-90: alicyclic petroleum resin having a hydrogenation rate of 95 % by weight ( Arkon P-90, Arakawa Chemical Co., Ltd.)

Arkon P-100: alicyclic petroleum resin having a hydrogenation rate of 95 % by weight ( Arkon P-100, Arakawa Chemical Co., Ltd.)

Arkon P-115: alicyclic petroleum resin having a hydrogenation rate of 95 % by weight ( Arkon P-115, Arakawa Chemical Co., Ltd.)

FTR-6100: pure monomer petroleum resin, styrene oligomer, non-hydrogenated ( FTR-6100, Mitsui Petrochemical Co., Ltd.)

FTR-8100: pure monomer petroleum resin, styrene oligomer, non-hydrogenated ( FTR-8100, Mitsui Petrochemical Co., Ltd.)

### (1) Synthesis of Dibenzylidenesorbitol

182 g (1 mole) of D-sorbitol, 212 g (2 mole) of benzaldehyde, 800ml of toluene and 2ml of concentrated sulfuric acid were fed into a 3-liter 3-necked flask equiped with an agitator and a reflux condenser. The reaction was carried out for 3 hours at a temperature of 8 °C. Next toluene was removed by distillation the residue was nutralized with potassuim hydroxide. After washing, filtering and drying, 347 g (yield: 97 % by weight) of dibenzylidenesorbitol was obtained.

### (2) Synthesis of Dibenzylidenexylitol

320 g (yield: 95 % by weight) of dibenzylidenexylitol was obtained in the same way as that described in (1) above, except that 152 g (2 mole) of xylitol was used in stead of D-sorbitol.

### (3) Synthesis of Dibenzylidenemannitol

269 g (yield: 75 % by weight) of dibenzylidenemannitol was obtained in the same way as that described in (1) above, except that 182 g (1 mole) of D-mannitol was used in stead of D-sorbitol.

### Physical Property Tests of Laminated Glass

Each laminated glass obtained in Examples 1 to 26 and Comparative Examples 1 to 21 was cut into 2 cm wide, 10 cm long strips to prepare test samples for physical property tests.

The following tests were conducted using the above-mentioned test samples.

The testing procedures are described below.

The results are shown in Tables 8 to 12.

### (i) Transparency test

Integral turbidity meter (Sekibun-shiki Dakudo-kei available from Tokyo Denshoku Co., Ltd.) was used to measure the total light transmittance (%) and the haze value (%) of samples. The test was conducted with n = 10.

### (ii) Adhesion strength (Peeling strength) test

The interlayer film (immediately after preparation) was interposed between transparent float glass plate and polyethylene terephthalate film, and adhered under the same condition as that of the preparing of the above-mentioned laminated glass.

The laminate obtained was cut into 2 cm wide, 10 cm long strips.

The interlayer film was peeled at the edge portion of the above-mentioned laminate.

The 90 degree peel strength (kg/cm) of the strips was measured using a constant speed tensile tester (Tensilon UCE 500 available from Orientech Co., Ltd.), and drawing the end of the peeled interlayer film at a speed of 50 cm/minute. The testing was conducted with n = 10.

### (iii) Long-term storability test

After a interlayer film was allowed to stand for 40 days at 40 °C, the long-term storability test of the interlayer film was conducted in the same way as that described in the above-mentioned adherability strength test.

### (iv) Thermal shock test

One cycle was defined as a process in which a sample was allowed to stand for 2 hours at 70 °C, cooled from 70 °C to -20 °C over 2 hours, allowed to stand for 2 hours at -20 °C, and then heated from -20 °C to 70 °C over 2 hours. The sample were checked for peeled layers after 10 cycles.

### (v) Moisture resistance test

A sample was allowed to stand for 2 weeks at 55 °C and ambient relative humidity of 98%, and then checked for peeled layers. However, In Examples 10 to 21 and Comparative examples 7 to 15, each sample was allowed to stand for 8 weeks at 60 °C and ambient relative humidity of 95%, and then checked for peeled layers.

### (vi) Boiling test.

A sample was allowed to stand for 2 hours in boiling water, and then checked for peeled layers.

### (vii) Impact resistance test

Conducted according to JIS R 3205. A sample was kept at 23 °C and a relative humidity of 50 % for 4 hours, and it was held vertically by a support frame. An impacting object with a weight of 45 kg and a maximum diameter of 75 mm was dropped from a height of 30 cm, with a free fall pendulum motion, into the center of the sample. If it created an opening through which a sphere with a 75 mm diameter can freely go, then the result was indicated as " X", and if not, the result was indicated as "circle".

### (viii) Weatherability test

Yellowness index (YI) was measured at a black panel temperature of 63 °C according to JIS K7103, using sunshineweatherometer according to JIS A1415.

YI was evaluated by the difference (Δ YI) between the initial value and YI obtained 1000 hours after. If the obtained result is good, then it was indicated as "circle", and if not, it was indicated as "X".

### (ix) Long-term plasticizer resistance test

Di-2-ethylhexyl phthalate as plasticizer was placed in a butt made of stainless steel. A sample was immersed therein and allowed to stand for 300 hours at 50 °C in a oven, and then the peeled area of the edge portion was measured.

Long-term plasticizer resistance was evaluated by the proportion of-the peeled area to the total area of the Laminated glass. If the result is good, then it was indicated as "circle", and if not, it was indicated as "X".

**Table 8**

| (Performance of laminated glass) | | | | | | |
|---|---|---|---|---|---|---|
| | Examples | | | | Comparative examples | |
| | 1 | 2 | 3 | 4 | 1 | 2 |
| Total light transmittance (%) | 88.0 | 88.2 | 88.0 | 88.5 | 87.7 | 86.7 |
| Haze (%) | 0.6 | 0.5 | 0.6 | 0.4 | 1.6 | 0.8 |

| Peel strength (kg/cm) | | | | | | |
|---|---|---|---|---|---|---|
| Immediately after preparation | 4.7 | 4.4 | 3.9 | 5.0 | 4.5 | 4.3 |
| 40 days after | 4.5 | 4.4 | 3.8 | 5.0 | 2.7 | 2.1 |
| Impact resistance test | ○ | ○ | ○ | ○ | ○ | ○ |
| Thermal shock test (Peeling) | Not observed | Not observed | Not observed | Not observed | Not observed | Not observed |
| Moisture resistance test (Peeling) | Not observed | Not observed | Not observed | Not observed | Not observed | Not observed |
| Boiling test (Peeling) | Not observed | Not observed | Not observed | Not observed | Not observed | Not observed |

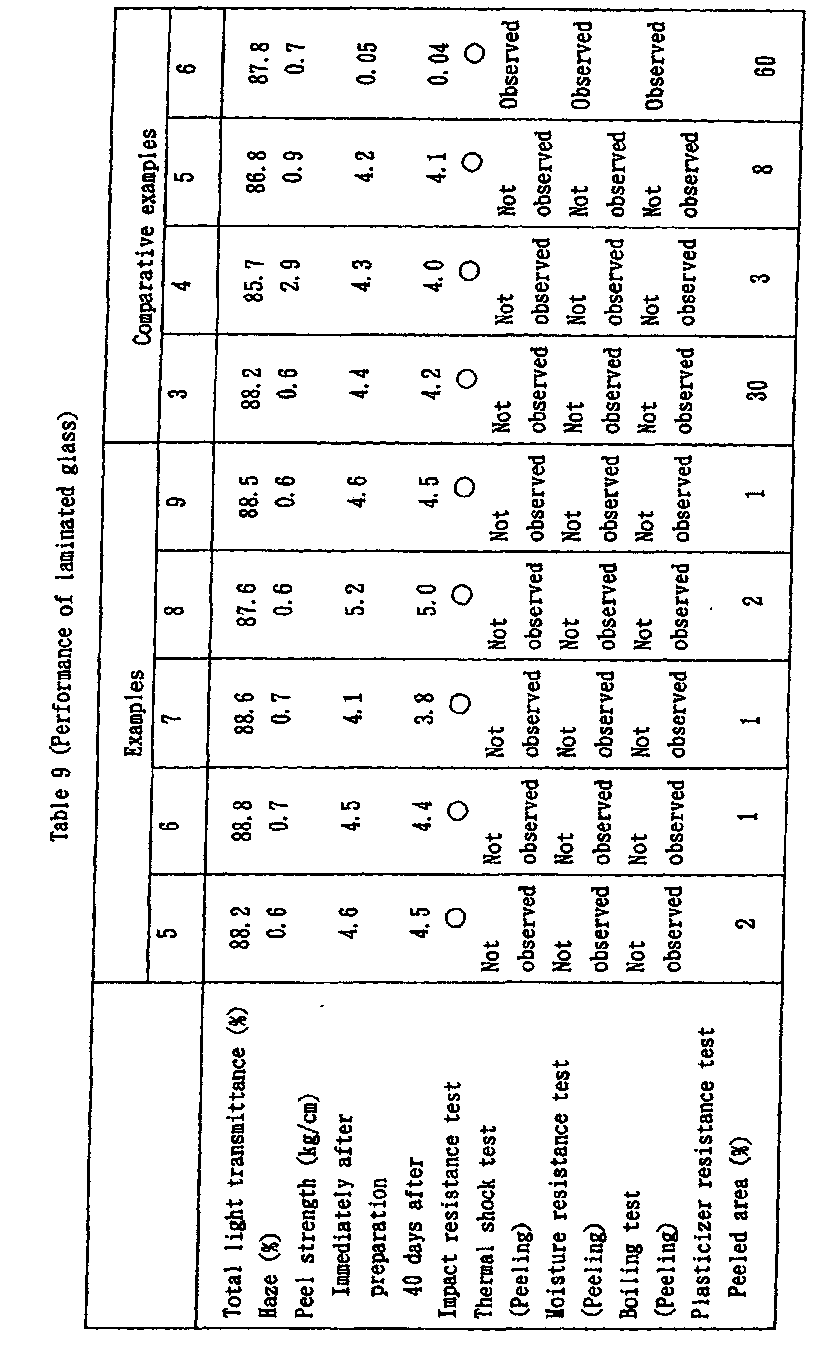

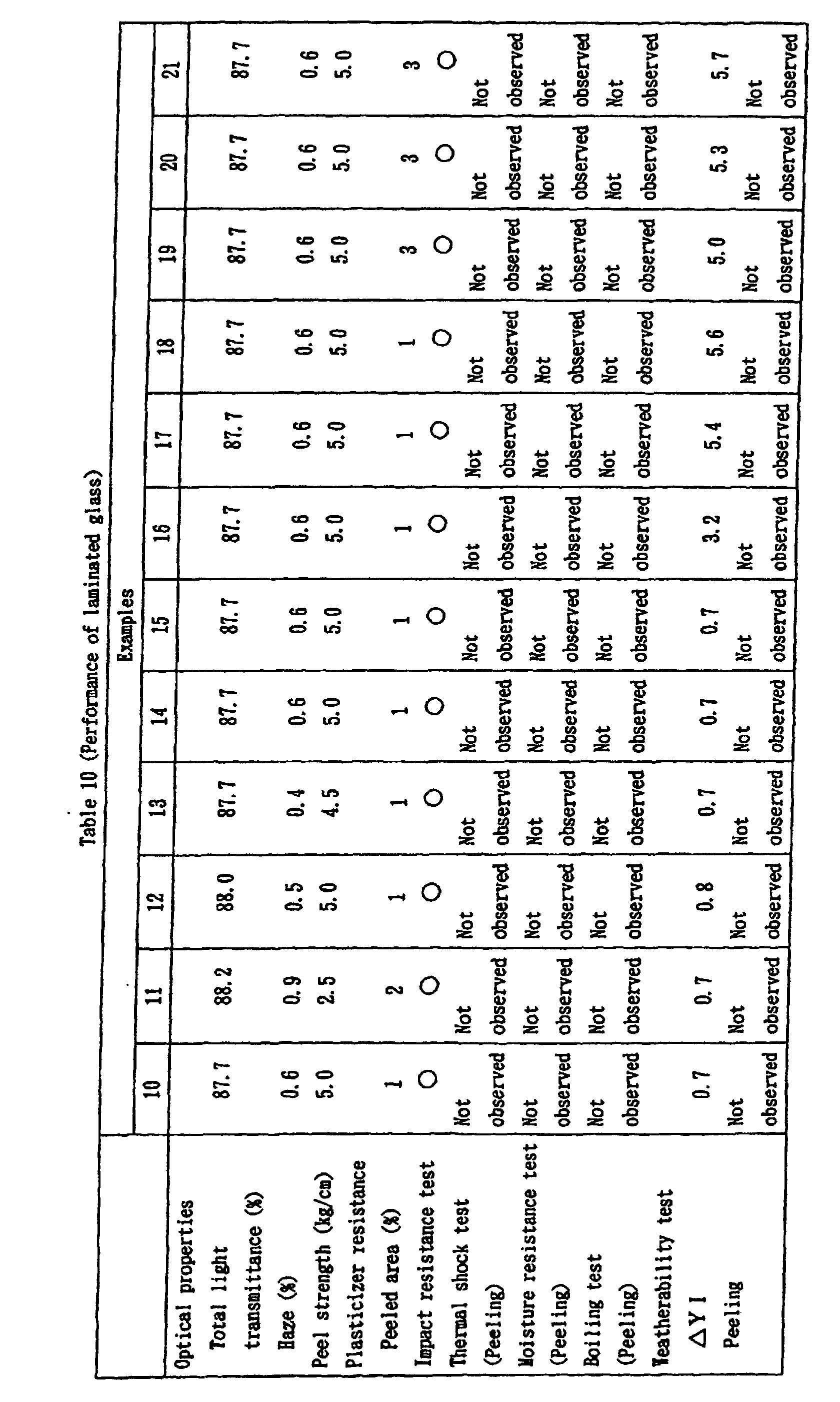

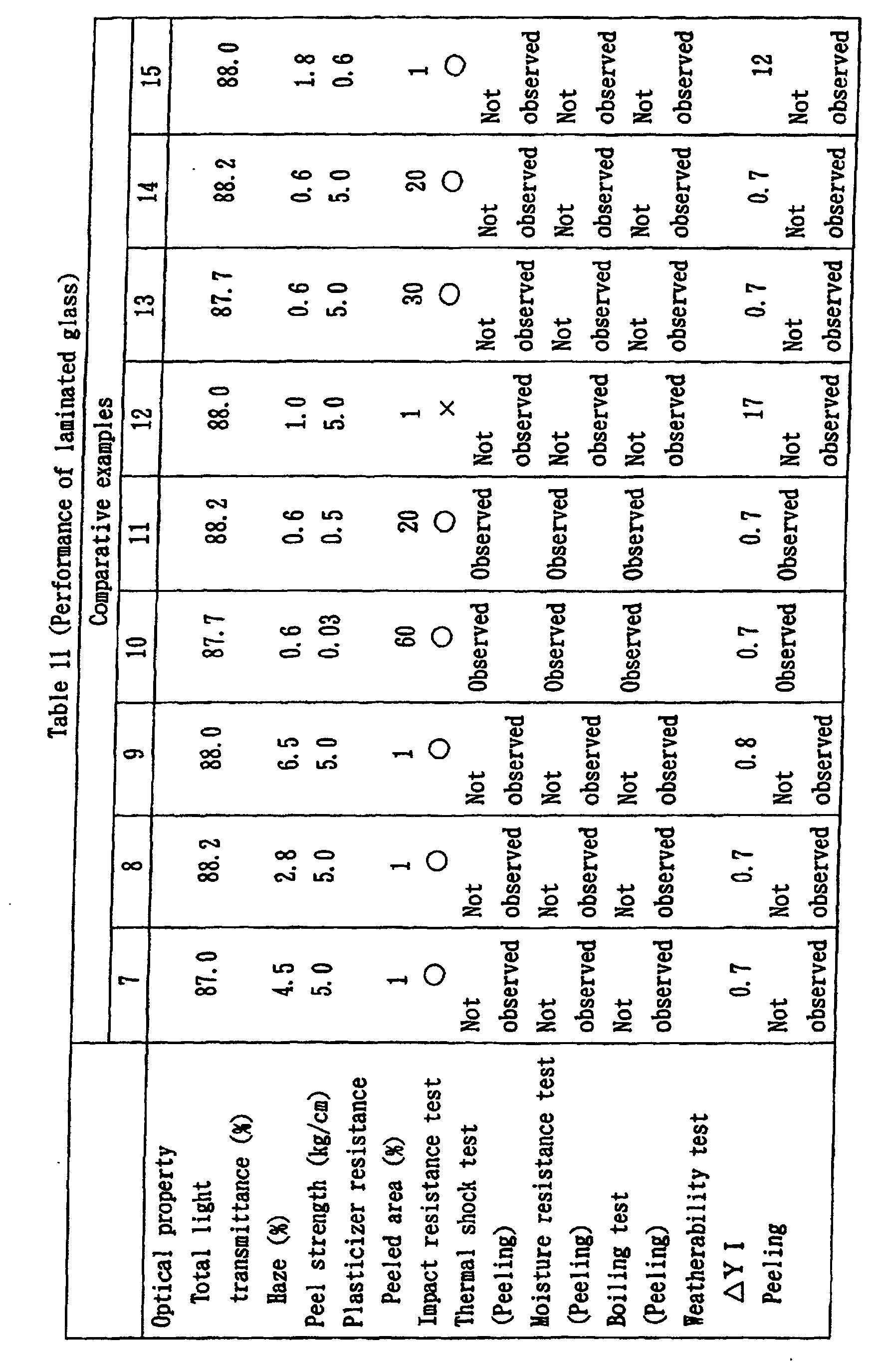

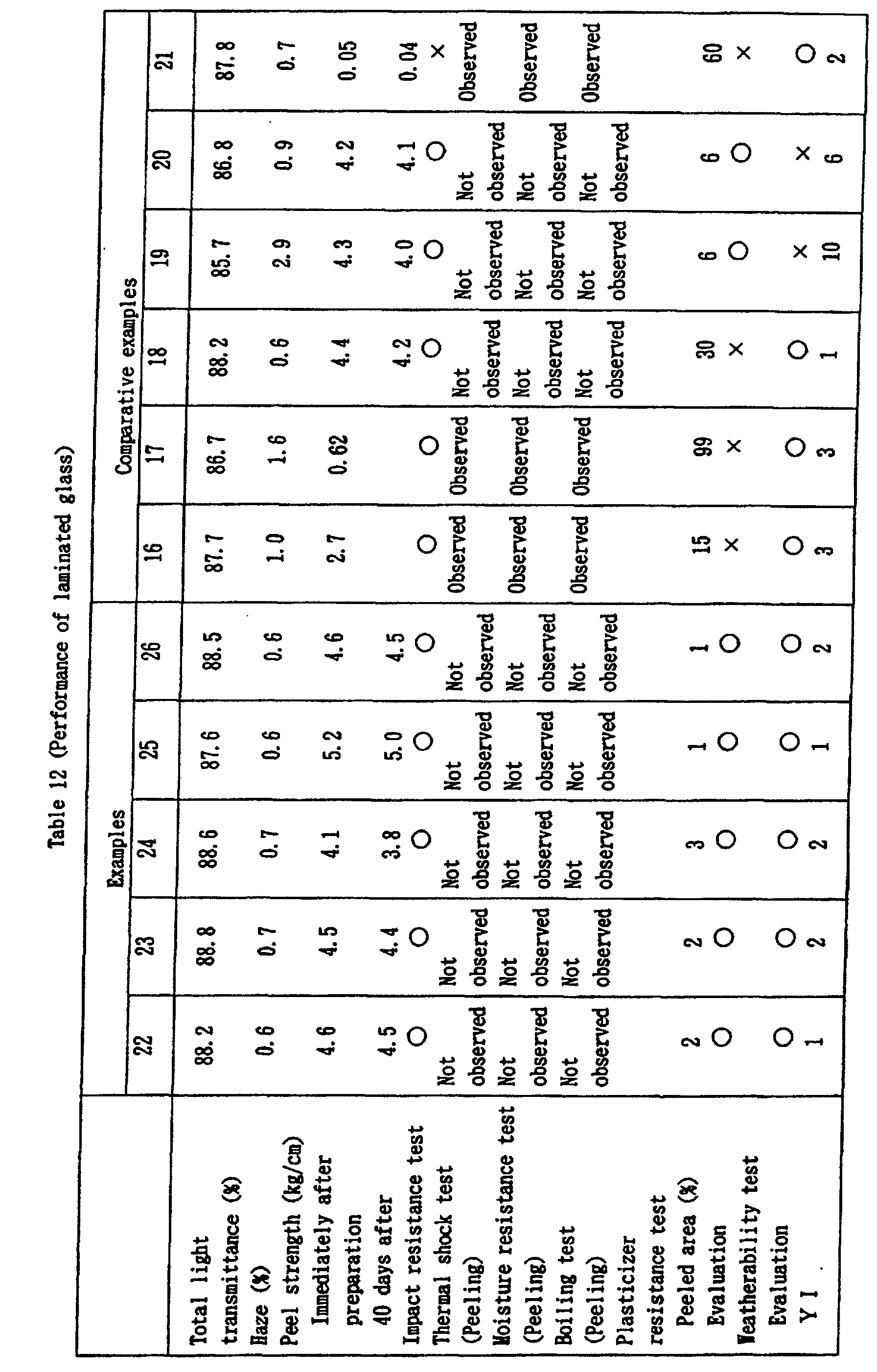

From these tables, it is found that the laminated glass which contains rosin resin or petroleum resin was improved in long-term storability compared with the laminated glass described in Japanese patent laid-open publication No.7-2551. In particular, petroleum resin improved long-term plasticizer resistance as well as long-term storability.

### Comparative example 22

### Production of interlayer film

One hundred parts by weight of an ethylene-vinyl acetate copolymer (amount of vinyl acetate: 28% by weight, MFR: 6) (Ultrasen 751, manufactured by Toso Co., Ltd.) and 0.1 part by weight of N-(2-aminoethyl)-3-aminopropylmethyldimethoxysilane were supplied to a roll mill, and molten with kneading at 150 °C.

The resulting mixture was interposed between polyester films having a thickness of 0.1 mm and, after molding into a sheet under the condition of a temperature of 150 °C and a pressure of 120 kg/cm² using a pressing machine, the sheet was allowed to stand until it was cooled to room temperature. Then, the polyester film was peeled off to produce a transparent interlayer film having a thickness of 0.4 mm.

### Production of laminated glass

The above interlayer film was interposed between transparent float glass plates (300 mm x 300 mm) having a thickness of 3 mm, and this sandwich material *was* put in a rubber bag. After deaerating under vacuum of 10 torr for 20 minutes, the sandwich material was transferred to an oven at 100 °C while maintaining in the deaerated state, and allowed to stand at this temperature for 30 minutes. After cooling to room temperature, the vacuum state was removed to produce a laminated glass having a multi-layer construction of glass / interlayer film / glass.

### Comparative example 23

In the manner described in comparative example 22, a transparent interlayer film having a thickness of 0.4 mm was produced.

The above interlayer film was put on a polyethylene terephthalate film having a thickness of 0.1 mm (Lumilar, manufactured by Toray Co., Ltd.) and these films were interposed between transparent float glass plates (300 mm x 300 mm) having a thickness of 3 mm, and this sandwich material was put in a rubber bag. After deaerating under . vacuum of 10 torr for 20 minutes, the sandwich material was transferred to an oven at 100 °C while maintaining in the deaerated state, and allowed to stand at this temperature for 30 minutes. After cooling to room temperature, the vacuum state was removed and the glass plate at the polyethylene terephthalate film side was removed to produce a laminated glass having a multi-layer construction of glass / interlayer film / polyethyleneterephthalate film.

### Comparative example 24

### Production of interlayer film

In the manner described in comparative example 22, a transparent interlayer film having a thickness of 0.4 mm was produced.Production of laminated glass The above interlayer film was interposed between a transparent float glass plate (300 mm x 300 mm) having a thickness of 3 mm and a transparent polycarbonate plate having a thickness of 3 mm (Yupiron Sheet NF2000U, manufactured:by Mitsubishi Gas Chemicals Co., Ltd.), and this-sandwich material was put in a rubber bag. After deaerating under vacuum of 10 torr for 20 minutes, the sandwich material was transferred to an oven at 100 °C while maintaining in the deaerated state, and allowed to stand at this temperature for 30 minutes. After cooling to room temperature, the vacuum state was removed to produce a laminated glass having a multi-layer construction of glass / interlayer film / polycarbonate plate.

### Comparative example 25

A modified ethylene-vinyl acetate copolymer product, which was prepared by partially esterifying the partially saponified ethylene-vinyl acetate copolymer with phthalic anhydride in the manner described in Comparative Example 17, was used to obtain a interlayer film in the same manner as that described in comparative example 22.

In the manner described in comparative example 22, except for using the above-mentioned interlayer film, a laminated glass having a multi-layer construction of glass / interlayer film / glass was produced.

### Comparative example 26

### Production of interlayer film

One hundred parts by weight of an ethylene-vinyl acetate copolymer (content of vinyl acetate: 19% by weight, MFR: 2.5) (Evaflex 460, manufactured by Mitsui Du Pont Polychemical Co., Ltd.), 3 parts by weight of triallylisocyanurate (TAIC, manufactured by Nihon Kasei Co., Ltd.), 1 part by weight of 1,1-bis(t-butylperoxy)-3,3,5-trimethylcyclohexane (Perhexa 3M, manufactured by Nippon Oil & Fats Co., Ltd.) and 0.3 part by weight of g-methacryloxypropyltrimethoxysilane (manufactured by Chisso Co., Ltd.) were supplied to a roll mill, and molten with kneading at 100 °C.

The resulting mixture was interposed between polyester films having a thickness of 3 mm, and, after molding into a sheet under the condition of a temperature of 100 °C and a pressure of 120 kg/cm² using a pressing machine, the sheet was allowed to stand until it was cooled to room temperature. Then, the polyester film was peeled off to produce a transparent interlayer film having a thickness of 0.4 mm.

### Production of laminated glass

The above interlayer film was interposed between transparent float glass plates (300 mm x 300 mm) having a thickness of 3 mm, and this sandwich material was put in a rubber bag. After deaerating under vacuum of 10 torr for 20 minutes, the sandwich material was transferred to an oven at 100 °C while maintaining in the deaerated state, and allowed to stand at this temperature for 30 minutes. The sandwich material was heat-pressed in an autoclave under the condition of a temperature of 135 °C and a pressure of 12 kg/cm² , and then cooled to room temperature to produce a laminated glass having a multi-layer construction of glass / interlayer film / glass.

### Comparative example 27

In the manner described in comparative example 22, except for using 100 parts by weight of ethylene-methyl methacrylate (content of methyl methacrylate: 20% by weight, MFR: 4) (Acrift WH202, manufactured by Sumitomo Chemical Industries Co., Ltd.) in place of the ethylene-vinyl acetate copolymer, an interlayer film and a laminated glass were produced.

### Comparative example 28

In the manner described in comparative example 23, except for using 100 parts by weight of ethylene-methyl methacrylate (content of methyl methacrylate: 20% by weight, MFR: 4) (Acrift WH202, manufactured by Sumitomo Chemical Industries Co., Ltd.) in place of the ethylene-vinyl acetate copolymer, an interlayer film and a laminated glass were produced.

### Comparative example 29

In the manner described in comparative example 24, except for using 100 parts by weight of ethylene-methyl methacrylate (content of methyl methacrylate: 20% by weight, MFR: 4) (Acrift WH202, manufactured by Sumitomo Chemical Industries Co., Ltd.) in place of the ethylene-vinyl acetate copolymer, an interlayer film and a laminated glass were produced.

### Comparative example 30

In the manner described in comparative example 30, except for using 100 parts by weight of ethylene-ethyl acrylate (content of ethyl acrylate: 25% by weight, MFR: 20) (NUC-6570, manufactured by Nippon Unicar Co., Ltd.) in place of the ethylene-vinyl acetate copolymer, an interlayer film and a laminated glass were produced.

### Comparative example 31

In the manner described in comparative example 26, except for using 100 parts by weight of ethylene-methyl methacrylate (content of methyl methacrylate: 20% by weight, MFR: 4) (Acrift WH202, manufactured by Sumitomo Chemical Industries Co., Ltd.) in place of the ethylene-vinyl acetate copolymer, an interlayer film and a laminated glass were produced.

### Comparative example 32

In the manner described in comparative example 22, except for formulating no N-(2-aminoethyl)-3-aminopropylmethyldimethoxysilane, an interlayer film and a laminated glass were produced.

### Comparative example 33

According to the same manner as that described in comparative example 30, except for formulating no N-(2-aminoethyl)-aminopropylmethyldimethoxysilane, an interlayer film and a laminated glass were produced.

### Comparative Example 34

### Production of interlayer film

One hundred parts of polyvinyl butyral (polymerization degree: 1700, butyralation degree: 65 molar %, acetylation degree: 1 molar %, residual vinyl alcohol: 34 molar %), 40 parts by weight of triethyleneglycol-di-2-ethylbutyrate and 0.03 part by weight of magnesium acetate were molten with kneading using a twin roll at 150 °C. The resulting mixture was interposed between polyester films and, after molding into a sheet under the condition of a temperature of 150 °C and a pressure of 120 kg/cm² using a pressing machine, the sheet was allowed to stand until it was cooled to room temperature. Then, the polyester film was peeled off to produce a transparent interlayer film having a thickness of 0.4 mm. The resulting interlayer film was maintained in a thermo-hygrostat so that the water content became 0.4 to 0.5% by weight.

### Production of laminated glass

The above interlayer film was interposed between transparent float glass plates (300 mm x 300 mm) having a thickness of 3 mm, and this sandwich material was put in a rubber bag. After deaerating under vacuum of 10 torr for 20 minutes, the sandwich material was transferred to an oven at 100 °C while maintaining in the deaerated state, and allowed to stand at this temperature for 30 minutes. The sandwich material was heat-pressed in an autoclave under the condition of a temperature of 145 °C and a pressure of 13 kg/cm² , and then cooled to room temperature to produce a laminated glass plate having a multi-layer construction of glass / interlayer film / glass.

### Comparative Example 35

### Production of interlayer film

In the manner described in Comparative Example 34, a transparent interlayer film having a thickness of 0.4 mm was produced and maintained in a thermo-hygrostat so that the water content became 0.4 to 0.5% by weight.

### Production of laminated glass

The above interlayer film was put on a polyethyleneterephthalate film having a thickness of 0.1 mm (Lumilar, Toray Co., Ltd., Ltd.), and then interposed between transparent float glass plates (300 mm x 300 mm) having a thickness of 3 mm, and this sandwich material was put in a rubber bag. After deaerating under vacuum of 10 torr for 20 minutes, the sandwich material was transferred to an oven at 100 °C while maintaining in the deaerated state, and allowed to stand at this temperature for 30 minutes.

The sandwich material was heat-pressed in an autoclave under the condition of a temperature of 135 °C and a pressure of 12 kg/cm². After cooling to room temperature, the glass plate at the polyethylene terephthalate film side was removed to produce a laminated glass having a multi-layer construction of glass / interlayer film / polyethylene terephthalate film.

The laminated glass of the Comparative Examples 22 to 35 thus obtained was subjected to a moisture resistance test (whitening length and peel strength), respectively. The results are shown in Tables 13 and 14.

### <Moisture resistance test>

### (1) Measurement of whitening length

Each laminated glass (immediately after production) obtained in the Comparative Examples 22 to 35 was allowed to stand in a thermo-hygrostat (temperature: 50 °C, relative humidity: 95%) for 4 weeks, respectively. The whitening length (mm) from the edge of the laminated glass to the internal direction was measured.

### (2) Measurement of peel strength

The interlayer film obtained in the respective Examples and Comparative Examples was adhered on one surface of a transparent float glass (comparative examples 22, 25, 26, 27, 30, 31, 32, 33, and Comparative 34), a transparent polycarbonate plate (comparative examples 24 and 29) and a transparent polyethylene terephthalate film (Comparative examples 23, 28 and 35) [2 mm in width x 100 mm in length] under the same condition as that of the manufacturing of the laminated glass of the respective Examples and Comparative Examples to produce a sample of 2 mm in width x 100 mm in length, respectively.

This sample was allowed to stand at a temperature of 50 °C and a relative humidity of 95% for 4 weeks. The interlayer film at the edge part was peeled off, and then the edge part of the peeled interlayer film was subjected to a 90 degree peeling test at a stress rate of 500 mm/minute using a tensile tester (Tensilon UCE 500, manufactured by Orientech Co., Ltd., Ltd.) to measure a peel strength. In addition, the peel strength of the sample (immediately after production) before subjecting to the humidity resistance test (those which are not allowed to stand at a temperature of 50 °C and a relative humidity of 95% for 4 weeks) was also measured.

**Table 13**

| | Whitening length (mm) | | Peel strength (kg/cm) | | Remarks |
|---|---|---|---|---|---|
| | Before test | After test | Before test | After test | |
| Comp. Example 22 | 0 | 0 | 5.0 | 4.8 | Interlayer film : BVA-1 containing silane coupling agent Peel strength : Between float glass and interlayer film |
| Comp. Example 23 | 0 | 0 | 3.0 | 2.8 | Interlayer film EVA-1 containing silane coupling agent Peel strength : Between polyethylene terephthalate film and interlayer film |
| Comp. Example 24 | 0 | 0 | 6.0 | 6.0 | Interlayer film : BVA-1 containing Silane coupling agent Peel strength : Between polycarbonate plate and interlayer film |
| Comp. Example 25 | 0 | 0 | 0.6 | 0.4 | Interlayer film : Partially saponificated EVA-2 modified with phthalic anhydride Peel strength : Between float glass and interlayer film |
| Comp. Example 26 | 0 | 0 | 2.7 | 2.5 | Interlayer film EVA-3 cross-linked with organic peroxide Peel strength : Between float glass and interlayer film |
| Comp. Example 27 | 0 | 0 | 5.0 | 4.8 | Interlayer film EEA-1 containing silane coupling agent Peel strength : Between float glass and interlayer film |
| EVA-1 : Ethylene-vinyl acetate copolymer (ULTRASEN 751) | | | | | |
| EVA-2 : Ethylene-vinyl acetate copolymer (ULTRASEN 750) | | | | | |
| EVA-3 : Ethylene-vinyl acetate copolymer (EVAFLEX 460) | | | | | |
| EEA-1 : Ethylene-methyl methacrylate copolymer (ACRIFT WH202) | | | | | |
| Silane coupling agent : N-(2-Aminoethyl)-3-aminopropylmethyldimethoxysilane | | | | | |

**Table 14**

| | Whitening length (mm) | | Peel strength (kg/cm) | | Remarks |
|---|---|---|---|---|---|
| | Before test | After test | Before test | After test | |
| Comp. Example 28 | 0 | 0 | 3.0 | 2.8 | Interlayer film EA-1 containing silane coupling agent Peel strength : Between polyethylene terephthalate film and interlayer film |
| Comp. Example 29 | 0 | 0 | 6.0 | 6.0 | Interlayer film : EA-1 containing silane coupling agent Peel strength : Between polycarbonate plate and interlayer film |
| Comp. Example 30 | 0 | 0 | 5.0 | 4.8 | Interlayer film : EA-2 containing silane coupling agent Peel strength : Between float glass and interlayer film |
| Comp. Example 31 | 0 | 0 | 2.7 | 2.5 | Interlayer film : EA-2 cross-linked with organic peroxide Peel strength : Between float glass and interlayer film |
| Comp. Example 32 | 0 | 0 | 0.003 | 0.002 | Interlayer film : EVA-1 containing no silane coupling agent Peel strength : Between float glass and interlayer film |
| Comp. Example 33 | 0 | 0 | 0.003 | 0.002 | Interlayer film EA-2 containing no silane coupling agent Peel strength : Between float glass and interlayer film |
| Comparative example 34 | 0 | 5 | 3.0 | 0.2 | Interlayer film : Plasticized polyvinyl butyral containing magnesium acetate Peel strength : Between float glass and interlayer film |
| Comparative example 35 | 0 | 20 | 1.5 | 0.1 | Interlayer film : Plasticized polyvinyl butyral containing magnesium acetate Peel strength : Between polyethylene terephthalate film and interlayer film |
| EA-1 : Ethylene-methyl methacrylate copolymer (ACRIFT WH202) | | | | | |
| EA-2 : Ethylene-ethyl acrylate copolymer (UNC-6570) | | | | | |
| Silane coupling agent : N-(2-Aminoethyl)-3-aminopropylmethyldimethoxysilane | | | | | |

From these tables, it is found that the laminated glass according to comparative examples 22 to 31 for vehicle side window shows good moisture resistance, which causes no poor appearance such as whitening of the edge portion of the interlayer film, interfacial peeling, etc. even if it is used in the state where the edge portion of the laminated glass is exposed for a long period of time. Thus, the laminated glass is suitable for use of vehicle side windows.

## Claims

1. An interlayer film for a laminated glass, said interlayer film having a composition which is free of organic peroxides and comprises
- 100 parts by weight of an ethylene-vinyl acetate copolymer or ethylene-(meth-)acrylate copolymer or a modified product thereof;
- 0.01 to 4 parts by weight of a transparency improving agent;
- 0.01 to 4 parts by weight of a silane coupling agent; and
- 1 to 40 parts by weight of a rosin resin or a hydrocarbon resin.

2. The interlayer film according to claim 1, wherein the melt index of said ethylene-vinyl acetate copolymer or said ethylene-(meth-)acrylate copolymer or said modified product thereof is 0.1 to 500 g/10 min (ASTM 1238-65T).

3. The interlayer film according to claim 1 or 2, wherein said rosin resin or hydrocarbon resin is hydrogenated and has a hydrogenation rate of 88% by weight or higher.

4. The interlayer film according to claim 3, wherein said hydrogenation rate is 95 % by weight or higher.

5. The interlayer film according to any of the claims 1 to 4, wherein the water absorption rate (at 23° C for 24h according to JIS K7209) of said interlayer film being not more than 1,5% by weight.

6. The interlayer film according to any of the claims 1 to 5, wherein said rosin resin or hydrocarbon resin is present in an amount of from 2 to 30 parts by weight, based on 100 parts by weight of said ethylene-vinyl acetate copolymer or ethylene-(meth-)acrylate copolymer or modified product thereof.

7. The interlayer film according to any of the claims 1 to 6, wherein said rosin resin is selected from the group consisting of wood rosin, gum rosin, tall oil rosin, polymerized rosin, hydrogenated rosin, rosin ester, hydrogenated rosin ester and mixtures thereof, and said hydrocarbon resin is selected from the group consisting of aliphatic petroleum resin, aromatic petroleum resin, alicyclic petroleum resin, copolymer petroleum resin, hydrogenated petroleum resin, pure monomer petroleum resin and mixtures thereof.

8. The interlayer film according to any of the claims 1 to 7, wherein said transparency improving agent is selected from the group consisting of condensation products of 5- or higher-polyhydric alcohols and their derivatives and benzaldehyde and its derivatives, and calixarenes represented by the general formula (I): 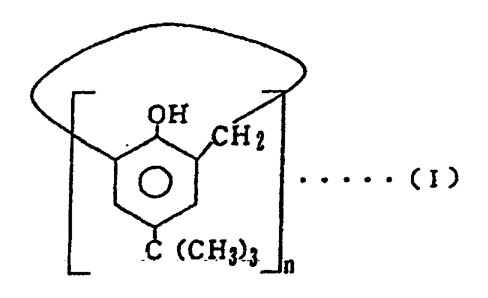 wherein n is an integer of 4 to 16.

9. The interlayer film according to claim 8, wherein said condensation product or compound of the general formula (I) is selected from the group consisting of dibenzylidene sorbitol, dibenzylidene xylitol, dibenzylidene dulcitol, dibenzylidene mannitol.

10. The interlayer film according to any of the claims 1 to 9, wherein said transparency improving agent is present in an amount of 0.02 to 1 part by weight, based on 100 parts by weight of said ethylene-vinyl acetate copolymer or ethylene-(meth-)acrylate copolymer.

11. The interlayer film according to any of the claims 1 to 10, wherein said silane coupling agent is a silane compound which has an organic functional group selected from amino, glycidyl, mercapto, vinyl and methacryl, and a hydrolyzable group.

12. The interlayer film according to any of the claims 1 to 11, wherein said silane coupling agent is present in an amount of 0.02 to 2 parts by weight, based on 100 parts by weight of said ethylene-vinyl acetate copolymer or ethylene-(meth-)acrylate copolymer.

13. A laminated glass, comprising an interlayer film according to any of the claims 1 to 12 disposed between two organic or inorganic glass plates.

14. The laminated glass according to claim 13, further comprising between said organic or inorganic glass plates a layer selected from the group consisting of a polymer film, a metal plate or paper, wherein said interlayer film is disposed between said layer and respective ones of said organic or inorganic glass plates.

15. The laminated glass according to claim 13 or 14, wherein the peel strength between said interlayer film and said inorganic or organic glass plate or said layer which is provided in contact to said interlayer film is 0.01 to 15 kg/cm, wherein the peel strength is measured with a Tensilon® UCE 500 constant speed tensile tester at a drawing speed of 50 cm/min.

## Patentansprüche

1. Ein Zwischenschichtfilm für ein Verbundglas, wobei der Zwischenschichtfilm eine Zusammensetzung aufweist, die frei von organischen Peroxiden ist und die umfasst:
- 100 Gewichtsteile eines Ethylen-Vinylacetat-Copolymers oder eines Ethylen-(Meth)acrylat-Copolymers oder eines modifizierten Produkts desselben;
- 0,01 bis 4 Gewichtsteile eines transparenzverbessernden Mittels;
- 0,01 bis 4 Gewichtsteile eines Silan-Haftvermittlers; und
- 1 bis 40 Gewichtsteile eines Kolophoniumharzes oder eines Kohlenwasserstoffharzes.

2. Zwischenschichtfilm nach Anspruch 1, bei dem der Schmelzindex des Ethylen-Vinylacetat-Copolymers oder des Ethylen-(Meth)acrylat-Copolymers oder des modifizierten Produkts desselben 0,1 bis 500 g/10 min (ASTM 1238-65T) beträgt.

3. Zwischenschichtfilm nach Anspruch 1 oder 2, bei dem das Kolophoniumharz oder das Kohlenwasserstoffharz hydriert ist und einen Hydrierungsgrad von 88 Gew.-% oder höher aufweist.

4. Zwischenschichtfilm nach Anspruch 3, bei dem der Hydrierungsgrad 95 Gew.-% oder mehr beträgt.

5. Zwischenschichtfilm nach einem der Ansprüche 1 bis 4, bei dem der Wasserabsorptionsgrad (bei 23°C für 24 Stunden gemäß JIS K7209) des Zwischenschichtfilms nicht mehr als 1,5 Gew.-% beträgt.

6. Zwischenschichtfilm nach einem der Ansprüche 1 bis 5, bei dem das Kolophoniumharz oder das Kohlenwasserstoffharz in einer Menge von 2 bis 30 Gewichtsteilen, bezogen auf 100 Gewichtsteile des Ethylen-Vinylacetat-Copolymers oder des Ethylen-(Meth)acrylat-Copolymers oder des modifizierten Produkts desselben, vorliegt.

7. Zwischenschichtfilm nach einem der Ansprüche 1 bis 6, bei dem das Kolophoniumharz aus der Gruppe bestehend aus Baumkolophonium, Balsamkolophonium, Tallölkolophonium, polymerisiertem Kolophonium, hydriertem Kolophonium, Kolophoniumester, hydriertem Kolophoniumester und deren Gemischen ausgewählt ist und bei dem das Kohlenwasserstoffharz aus der Gruppe bestehend aus aliphatischem Erdölharz, aromatischem Erdölharz, alicyclischem Erdölharz, Copolymer-Erdölharz, hydriertem Erdölharz, reinem Monomer-Erdölharz und deren Gemischen ausgewählt ist.

8. Zwischenschichtfilm nach einem der Ansprüche 1 bis 7, bei dem das transparenzverbessernde Mittel aus der Gruppe bestehend aus Kondensationsprodukten von Alkoholen mit 5 oder mehr Hydroxylgruppen und deren Derivaten und Benzaldehyd und dessen Derivaten, sowie Calixarenen der allgemeinen Formel (I) 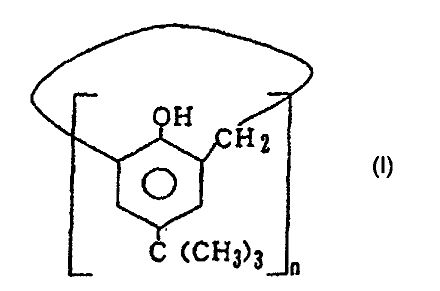 worin n eine ganze Zahl von 4 bis 16 ist, ausgewählt ist.

9. Zwischenschichtfilm nach Anspruch 8, bei dem das Kondensationsprodukt oder die Verbindung der allgemeinen Formel (l) aus der Gruppe bestehend aus Dibenzylidensorbit, Dibenzylidenxylit, Dibenzylidendulcit und Dibenzylidenmannit ausgewählt ist.

10. Zwischenschichtfilm nach einem der Ansprüche 1 bis 9, bei dem das transparenzverbessemde Mittel in einer Menge von 0,02 bis 1 Gewichtsteil, bezogen auf 100 Gewichtsteile des Ethylen-Vinylacetat-Copolymers oder des Ethylen-(Meth)acrylat-Copolymers, vorliegt.

11. Zwischenschichtfilm nach einem der Ansprüche 1 bis 10, bei dem der Silan-Haftvermittler eine Silanverbindung ist, die eine organische funktionelle Gruppe aufweist, die aus einer Amino-, Glycidyl-, Mercapto-, Vinyl- und Methacrylgruppe und einer hydrolysierbaren Gruppe ausgewählt ist.

12. Zwischenschichtfilm nach einem der Ansprüche 1 bis 11, bei dem der Silan-Haftvermittler in einer Menge von 0,02 bis 2 Gewichtsteilen, bezogen auf 100 Gewichtsteile des Ethylen-Vinylacetat-Copolymers oder des Ethylen-(Meth)acrylat-Copolymers, vorliegt.

13. Ein Verbundglas, das einen Zwischenschichtfilm nach einem der Ansprüche 1 bis 12 umfasst, der zwischen zwei Platten aus organischem oder anorganischem Glas angeordnet ist.

14. Verbundglas nach Anspruch 13, das ferner zwischen den Platten aus organischem oder anorganischem Glas eine Schicht umfasst, die aus der Gruppe bestehend aus einem Polymerfilm, einer Metallplatte und Papier ausgewählt ist, wobei der Zwischenschichtfilm zwischen der Schicht und jeweiligen Platten aus organischem oder anorganischem Glas angeordnet ist.

15. Verbundglas nach Anspruch 13 oder 14, bei dem die Ablösefestigkeit zwischen dem Zwischenschichtfilm und der Platte aus anorganischem oder organischem Glas oder der Schicht, die im Kontakt mit dem Zwischenschichtfilm steht, 0,01 bis 15 kg/cm beträgt, wobei die Ablösefestigkeit mit einer Tensilon® UCE 500 Konstantgeschwindigkeits-Zugprüfmaschine bei einer Zuggeschwindigkeit von 50 cm/min gemessen wird.

## Revendications

1. Film intercalaire pour un verre feuilleté, ledit film intercalaire ayant une composition qui est exemple de peroxydes organiques et qui comprend
- 100 parties en masse d'un copolymère éthylène-acétate de vinyle ou d'un copolymère éthylène-(méth)acrylate ou d'un de leurs produits modifiés;
- 0,01 à 4 parties en masse d'un agent améliorant la transparence;
- 0,01 à 4 parties en masse d'un agent de couplage constitué par un silane; et
- 1 à 40 parties en masse d'une résine de colophane ou d'une résine d'hydrocarbure.

2. Film intercalaire selon la revendication 1, dans lequel l'indice de fluidité à l'état fondu dudit copolymère éthylène-acétate de vinyle ou dudit copolymère éthylène-(méth)acrylate ou dudit un de leurs produits modifiés est compris entre 0,1 et 500 g/10 minutes (ASTM 1238-65T).

3. Film intercalaire selon la revendication 1 ou 2, dans lequel ladite résine de colophane ou ladite résine d'hydrocarbure est hydrogénée et présente un taux d'hydrogénation supérieur ou égal à 88% en masse.

4. Film intercalaire selon la revendication 3, dans lequel ledit taux d'hydrogénation est supérieur ou égal à 95% en masse.

5. Film intercalaire selon l'une quelconque des revendications 1 à 4, dans lequel le taux d'absorption de l'eau (à 23°C pendant 24 heures selon la norme JIS K7209) dudit film intercalaire n'est pas supérieur à 1,5% en masse.

6. Film intercalaire selon l'une quelconque des revendications 1 à 5, dans lequel ladite résine de colophane ou ladite résine d'hydrocarbure est présente en une quantité comprise entre 2 et 30 parties en masse, sur la base de 100 parties en masse dudit copolymère éthylène-acétate de vinyle ou dudit copolymère éthylène(méth)acrylate ou d'un de leurs produits modifiés.

7. Film intercalaire selon l'une quelconque des revendications 1 à 6, dans lequel ladite résine de colophane est choisie dans le groupe constitué par la colophane de bois, la résine naturelle de pin, la colophane d'huile de pin, la colophane polymérisée, la colophane hydrogénée, un ester de colophane, un ester de colophane hydrogénée et leurs mélanges et dans lequel ladite résine d'hydrocarbure est choisie dans le groupe constitué par une résine de pétrole aliphatique, une résine de pétrole aromatique, une résine de pétrole alicyclique, une résine de pétrole copolymère, une résine de pétrole hydrogénée, une résine de pétrole purement monomère et leurs mélanges.

8. Film intercalaire selon l'une quelconque des revendications 1 à 7, dans lequel ledit agent améliorant la transparence est choisi dans le groupe constitué par les produits de condensation des alcools polyhydriques à 5 fonctions ou plus et leurs dérivés et du benzaldéhyde et ses dérivés et les calixarènes représentés par la formule générale (I): 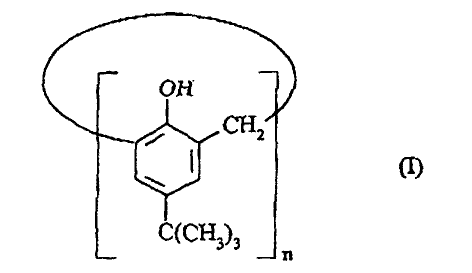 dans laquelle n est un entier compris entre 4 et 16.

9. Film intercalaire selon la revendication 8, dans lequel ledit produit de condensation ou ledit composé de formule générale (I) est choisi dans le groupe constitué par le dibenzylidène sorbitol, le dibenzylidène xylitol, le dibenzylidène dulcitol, le dibenzylidène mannitol.

10. Film intercalaire selon l'une quelconque des revendications 1 à 9, dans lequel ledit agent améliorant la transparence est présent en une quantité comprise entre 0,02 et 1 partie en masse, sur la base de 100 parties en masse dudit copolymère éthylène-acétate de vinyle ou dudit copolymère éthylène-(méth)acrylate.

11. Film intercalaire selon l'une quelconque des revendications 1 à 10, dans lequel ledit agent de couplage constitué par un silane est un composé silane qui comporte un groupe fonctionnel organique, choisi parmi les groupes amino, glycidyle, mercapto, vinyle et méthacryle, et un groupe hydrolysable.

12. Film intercalaire selon l'une quelconque des revendications 1 à 11, dans lequel ledit agent de couplage constitué par un silane est présent en une quantité comprise entre 0,02 et 2 parties en masse, sur la base de 100 parties en masse dudit copolymère éthylène-acétate de vinyle ou dudit copolymère éthylène-(méth)acrylate.

13. Verre feuilleté comprenant un film intercalaire selon l'une quelconque des revendications 1 à 12 placé entre deux plaques de verre organique ou inorganique.

14. Verre feuilleté selon la revendication 13, comprenant en outre entre lesdites plaques de verre organique ou inorganique une couche choisie dans le groupe constitué par un film polymère, une plaque métallique ou du papier, dans lequel ledit film intercalaire est placé entre ladite couche et les couches respectives desdites plaques de verre organique ou inorganique.

15. Verre feuilleté selon la revendication 13 ou 14, dans lequel la résistance au pelage entre ledit film intercalaire et ladite plaque de verre organique ou inorganique ou ladite couche, qui est placée au contact dudit film intercalaire est comprise entre 0,01 et 15 kg/cm, dans lequel la résistance au pelage est mesurée avec un dynamomètre Tensilon® UCE 500 à vitesse constante pour une vitesse d'étirage égale à 50 cm/minute.
